# EUROPEAN PATENT SPECIFICATION

(11) **EP 2 648 063 B1**
(45) Date of publication and mention of the grant of the patent: **27.02.2019**
(21) Application number: 13162538.6
(22) Date of filing: 05.04.2013
(51) Int. Cl.: G06F 1/16

(54) **Electronic paper controlling apparatus and method thereof**
Elektronische Papiersteuerungsvorrichtung und Verfahren dafür
Appareil de commande de papier électronique et procédé associé

(30) Priority: 07.04.2012 KR 20120036404
(43) Date of publication of application: 09.10.2013
(73) Proprietor: Samsung Electronics Co., Ltd., Gyeonggi-do 443-742 (KR)
(72) Inventor: Jung, Ji-hyun, Gyeonggi-do (KR); Lee, Chang-soo, Chungcheongnam-do (KR)
(74) Representative: HGF Limited

(56) References cited:
- EP-A1- 1 276 090
- US-A1- 2004 044 682
- US-A1- 2010 117 955
- US-B1- 6 243 074

## Description

### BACKGROUND

### 1. Field

Methods and apparatuses consistent with exemplary embodiments relate to an electronic paper controlling apparatus and a method of controlling at least one electronic paper.

### 2. Description of the Related Art

Flexible displays and transparent display panels have been recently developed.

The flexible display is formed by replacing a glass substrate with a plastic film, where the glass substrate surrounds liquid crystals in a liquid crystal display (LCD) and an organic light-emitting display. As such, the flexible display may be folded and unfolded.

Since the flexible display is not formed by using a glass substrate a low-temperature manufacturing method may be used to prevent the substrate from being damaged.

The flexible display is thin, light weight, and shock-resistant. The flexible display may be deformed and may be manufactured in various forms. In particular, the flexible display may be applied to industrial fields in which conventional glass-substrate displays cannot be applied.

For example, the flexible display may be applied to electronic books that may replace publications including magazines, textbooks, comic books, or the like, and new portable information technology (IT) products that include an ultra-small personal computer carried while its display is folded or rolled, and a smart card allowing real-time information confirmation, or the like. Since the flexible display is formed of a flexible plastic substrate, the applicable fields of the flexible display may be expanded to clothing and medical diagnosis.

US-2004/0044682-A1 describes an electronic paper file. The electronic paper file is provided with a receiving electronic paper displaying data sent from another electronic paper, and a sending electronic paper sending the display content to the other electronic paper.

### SUMMARY

One or more exemplary embodiments provide an electronic paper controlling apparatus and a control method thereof.

According to a first aspect of the present invention, there is provided an electronic paper controlling apparatus including: an interface configured to connect between the electronic paper controlling apparatus and a plurality of electronic papers; a communication unit configured to read or write identification (ID) information of the plurality of electronic papers through the interface; and a controller configured to control the communication unit to communicate with the plurality of electronic papers, based on the ID information; wherein the plurality of electronic papers comprises a first electronic paper directly coupled to the interface, a third electronic paper directly coupled to the interface, and a second electronic paper indirectly coupled to the interface through the first electronic paper and the third electronic paper; and wherein the controller is further configured to: determine a coupling order of coupling the first electronic paper, the second electronic paper, and the third electronic paper to the interface based on the ID information; control an electronic paper determined from among the plurality of electronic papers to display a contents list and an electronic papers list, wherein the electronic papers list indicates the plurality of electronic papers according to the determined coupling order; receive a selection of a content included in the contents list and an electronic paper included in the electronic papers list; and transmit the selected content to the selected electronic paper.

Also disclosed is an electronic paper controlling apparatus including: an interface through which a connection between the electronic paper controlling apparatus and electronic paper is established; a communication unit configured to read or write identification (ID) information of the electronic paper through the interface; and a controller configured to control the communication unit to communicate with the electronic paper, based on the ID information.

The electronic paper may include a plurality of electronic papers, and the controller may control the communication unit to communicate with the plurality of electronic papers based on the ID information of the plurality of electronic papers.

The controller may control the communication unit to communicate with a first electronic paper among the plurality of electronic papers directly through the interface and communicate with a second electronic paper among the plurality of electronic papers indirectly through the first electronic paper and the interface.

The interface may be configured to be directly coupled to the first electronic paper and a third electronic paper among the plurality of electronic papers, and may be configured to be indirectly coupled to the second electronic paper through the first electronic paper and the third electronic paper.

The ID information may include a first ID of a first electronic paper among the plurality of electronic papers and a second ID of a second electronic paper among the plurality of electronic papers different from the first ID, and the controller may control the communication unit to communicate with the first electronic paper based on the first ID and communicate with the second electronic paper based on the second ID.

The electronic paper may include a first electronic paper coupled to the interface, a second electronic paper coupled to the interface, and a third electronic paper coupled to the interface, and the controller may determine a coupling order of coupling the first electronic paper, the second electronic paper, and the third electronic paper to the interface based on the ID information.

The first electronic paper may be directly coupled to the interface, the second electronic paper may be indirectly coupled to the interface through the first electronic paper and the third electronic paper, and the third electronic paper may be directly coupled to the interface, and the controller may determine the first electronic paper is directly coupled to the interface, the second electronic paper is indirectly coupled to the interface through the first electronic paper and the third electronic paper, and the third electronic paper is directly coupled to the interface, based on the ID information.

The electronic paper controlling apparatus may further include a display.

The display may be a touch screen display.

The display may be a first electronic paper among the plurality of electronic papers.

The controller may determine content of the plurality of electronic papers, and control the display to display a content list of the content of the plurality of electronic papers.

The controller may manipulate the content of the plurality of electronic papers based on an input of a graphical user interface (GUI) displayed on the display.

The controller may determine a connection order of the plurality of electronic papers to the electronic paper controlling apparatus based on the ID information, and may control the display to display the connection order.

According to a second aspect of the present invention, there is provided a method of controlling an electronic paper controlling apparatus, the method including reading or writing ID information of a plurality of electronic papers connected to the electronic paper controlling apparatus through an interface of the electronic paper controlling apparatus; and communicating with the plurality of electronic papers, based on the ID information; wherein the plurality of electronic papers comprises a first electronic paper directly coupled to the interface, a third electronic paper directly coupled to the interface, and a second electronic paper indirectly coupled to the interface through the first electronic paper and the third electronic paper; wherein the method further comprises: determining a coupling order of coupling the first electronic paper, the second electronic paper, and the third electronic paper to the interface based on the ID information; controlling an electronic paper determined from among the plurality of electronic papers to display a contents list and an electronic papers list, wherein the electronic papers list indicates the plurality of electronic papers according to the determined coupling order; receiving a selection of a content included in the contents list and an electronic paper included in the electronic papers list; and transmitting the selected content to the selected electronic paper.

Also disclosed is a method of controlling an electronic paper controlling apparatus, the method including reading or writing ID information of an electronic paper connected to the electronic paper controlling apparatus though an interface of the electronic paper controlling apparatus; and communicating with the electronic paper, based on the ID information.

According to a third aspect of the present invention, there is provided a non-transitory computer-readable medium having recorded thereon a program that causes an electronic paper controlling apparatus to execute a control method, the method including reading or writing ID information of a plurality of electronic papers connected to the electronic paper controlling apparatus through an interface of the electronic paper controlling apparatus; and communicating with the plurality of electronic papers, based on the ID information; wherein the plurality of electronic papers comprises a first electronic paper directly coupled to the interface, a third electronic paper directly coupled to the interface, and a second electronic paper indirectly coupled to the interface through the first electronic paper and the third electronic paper; wherein the method further comprises: determining a coupling order of coupling the first electronic paper, the second electronic paper, and the third electronic paper to the interface based on the ID information; controlling an electronic paper determined from among the plurality of electronic papers to display a contents list and an electronic papers list, wherein the electronic papers list indicates the plurality of electronic papers according to the determined coupling order; receiving a selection of a content included in the contents list and an electronic paper included in the electronic papers list; and transmitting the selected content to the selected electronic paper.

Also disclosed is a non-transitory computer-readable medium having recorded thereon a program that causes an electronic paper controlling apparatus to execute a control method, the method including reading or writing ID information of an electronic paper connected to the electronic paper controlling apparatus though an interface of the electronic paper controlling apparatus; and communicating with the electronic paper, based on the ID information.

Also disclosed is an electronic paper control system including a plurality of electronic papers, the plurality of electronic papers storing identification (ID) information; and an electronic paper controlling apparatus that include an interface through which a connection between the electronic paper controlling apparatus and the plurality of electronic papers is established; a communication unit configured to read or write the ID information of the plurality of electronic papers through the interface; and a controller configured to control the communication unit to communicate with the plurality of electronic papers, based on the ID information.

### BRIEF DESCRIPTION OF THE DRAWINGS

The above and other aspects will become more apparent by describing in detail exemplary embodiments with reference to the attached drawings in which:
FIG. 1 is a block diagram illustrating a configuration of an electronic paper controlling apparatus according to an exemplary embodiment;
FIG. 2 illustrates a configuration of software used to control electronic paper, according to an exemplary embodiment;
FIG. 3 is a block diagram illustrating a configuration of the electronic paper, according to an exemplary embodiment;
FIG. 4 illustrates a ring-shaped connection unit according to an exemplary embodiment;
FIG. 5 illustrates a slot-shaped connection unit according to another exemplary embodiment;
FIG. 6 illustrates a pin-shaped connection unit according to another exemplary embodiment;
FIG. 7 illustrates a clip-shaped connection unit according to another exemplary embodiment;
FIG. 8 is a flowchart of a method of controlling an electronic paper, according to an exemplary embodiment;
FIG. 9 is a flowchart of a method of receiving identification (ID) information from the electronic paper, according to an exemplary embodiment;
FIGS. 10A through 10E are diagrams related to a method of determining a connection order of electronic papers, according to an exemplary embodiment;
FIG. 11 is a flowchart of a method of controlling an electronic paper, according to another exemplary embodiment;
FIG. 12 is a flowchart of a method of determining a connection order of electronic papers by using temporary ID information, according to an exemplary embodiment;
FIGS. 13A through 13E are diagrams illustrating a method of providing temporary ID information to an electronic paper, according to an exemplary embodiment;
FIG. 14 is a flowchart of a method of transmitting content to an electronic paper, according to an exemplary embodiment;
FIG. 15 illustrates a display unit of the electronic paper controlling apparatus, according to an exemplary embodiment;
FIG. 16 is a flowchart of a method of controlling an output from electronic paper, according to an exemplary embodiment;
FIG. 17 illustrates screens on which content is selected by a user, according to an exemplary embodiment;
FIG. 18 illustrates screens of a case in which content that is displayed on a slave electronic paper is displayed on a master electronic paper, according to an exemplary embodiment;
FIG. 19 is a flowchart of a method of performing, by the electronic paper controlling apparatus, data communication with the external device, according to an exemplary embodiment;
FIG. 20 illustrates transmitting content to the electronic paper, according to an exemplary embodiment;
FIG. 21 illustrates screens of a case in which a mobile terminal outputs content, which is obtained from the electronic paper, via a printer, according to an exemplary embodiment;
FIG. 22 illustrates a method of performing communication between first and second electronic paper controlling apparatuses, according to an exemplary embodiment;
FIG. 23 illustrates a method of controlling an input of electronic paper, according to an exemplary embodiment; and
FIG. 24 illustrates a method of obtaining content from the electronic paper and displaying the content, according to an exemplary embodiment.

### DETAILED DESCRIPTION OF EXEMPLARY EMBODIMENTS

All terms used herein should be construed as being understood as by the person having ordinary skill in the art. Otherwise, the meaning of the selected terms will be described in detail in the detailed description of the invention.

Also, when a part "includes" or "comprises" an element, unless there is a particular description contrary thereto, the part can further include other elements, and does not exclude the other elements. In the following description, terms such as "unit" and "module" indicate a unit for processing at least one function or operation, where the unit and the block may be embodied as hardware or software or embodied by combining hardware and software.

Hereinafter, exemplary embodiments will be described with reference to the attached drawings. The exemplary embodiments may, however, be embodied in many different forms, and should not be construed as being limited to the exemplary embodiments set forth herein; rather, the exemplary embodiments are provided so that this disclosure will be thorough and complete, and will fully convey the concepts described herein to those skilled in the art. In the following description, well-known functions or constructions are not described in detail since they would obscure the descriptions with unnecessary detail, and like reference numerals in the drawings denote like or similar elements throughout the specification.

As used herein, the term "and/or" includes any and all combinations of one or more of the associated listed items. Expressions such as "at least one of," when preceding a list of elements, modify the entire list of elements and do not modify the individual elements of the list.

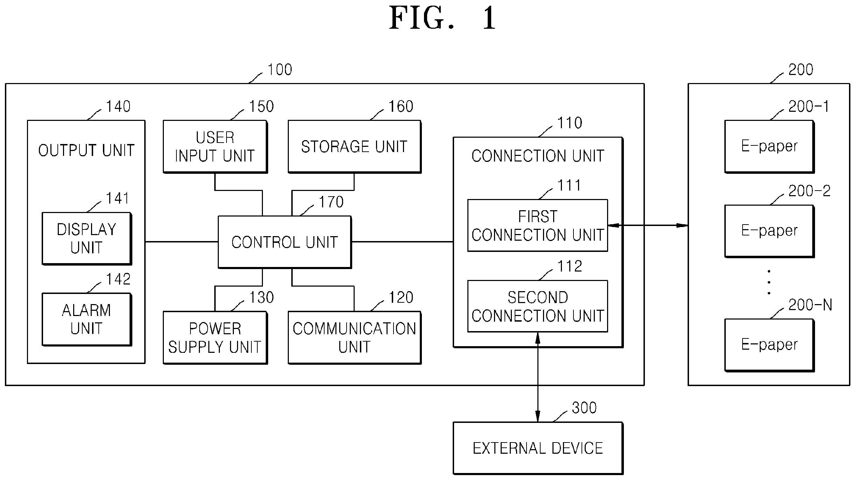

FIG. 1 is a block diagram illustrating a configuration of an electronic paper controlling apparatus 100 according to an exemplary embodiment.

The electronic paper controlling apparatus 100 may be connected to at least one electronic paper 200-1, 200-2, ..., 200-N. For convenience of description, the at least one electronic paper 200 will be referred to as electronic paper 200. The electronic paper controlling apparatus 100 may supplement functions the electronic paper 200 that the electronic paper 200 lacks due to characteristics of the electronic paper 200. For example, the electronic paper controlling apparatus 100 may control an input or an output of the electronic paper 200 or may charge the electronic paper 200. The electronic paper controlling apparatus 100 may include a connection unit 110, a communication unit 120, a power supply unit 130, an output unit 140, a user input unit 150, a storage unit 160, and a control unit 170.

However, not all elements of FIG. 1 are necessary. That is, the electronic paper controlling apparatus 100 may more elements than the elements of FIG. 1 or fewer elements than the elements in FIG. 1.

The connection unit 110 may be connected to the electronic paper 200 or an external device 300 and may be fixed thereto. The connection unit 110 may include a first connection unit 111 to connect the electronic paper controlling apparatus 100 to the electronic paper 200.

The first connection unit 111 may have one of various shapes. For example, the first connection unit 111 may have a ring shape including a plurality of grooves in an inner circumferential surface, a slot structure to which the at least one electronic paper 200 can be inserted, a pin structure that penetrates a hole of the at least one electronic paper 200, or a clip shape to hold the at least one electronic paper 200. A shape of the first connection unit 111 will be later described in more detail.

The first connection unit 111 may include a plurality of terminals. The terminals may be arranged at positions on the first connection unit 111 to which a plurality of electronic paper 200-1, 200-2, ..., 200-N is connected, respectively. For example, the first connection unit 111 may include an output terminal used to control an output from the electronic paper 200, an input terminal used to control an input to the electronic paper 200, a communication terminal used to perform data communication with the electronic paper 200, and the like. Also, the first connection unit 111 may further include a charge terminal used to charge the electronic paper 200.

The first connection unit 111 may detect connection with the electronic paper 200 by using the plurality of terminals.

According to the present exemplary embodiment, the electronic paper controlling apparatus 100 may further include a second connection unit 112 to connect the electronic paper controlling apparatus 100 to the external device 300. The external device 300 may be another electronic paper controlling apparatus, an external memory, a server, mobile terminals (e.g., a smart phone, a tablet PC, a notebook, and the like), a PC, a printer, consumer electronic (CE) devices (e.g., a smart TV, a camera, a refrigerator, an air conditioner, etc.), or the like.

The second connection unit 112 may be a connection terminal for external memory, an integrated standard connection terminal for external memory, a connection terminal for each external device, or an integrated standard connection terminal for each external device.

The communication unit 120 may include one or more elements for communicating with the electronic paper 200, the external device 300 (e.g., another electronic paper controlling apparatus, a cloud computing-based virtual server, a mobile terminal, etc.), or the like. For example, the communication unit 120 may include a wired communication module, a mobile communication module, a wireless internet module, a wired internet module, a short-distance communication module, and the like.

The wired communication module may communicate with the electronic paper 200 or the external device 300 in a wired manner via connection through the connection unit 110.

The mobile communication module exchanges a wireless signal with at least one of a base station, the external device 300, and a server in a mobile communication network. The wireless internet module is a module for wireless connection to a network such as the Internet and may be integrated within or external to the electronic paper controlling apparatus 100. The wired internet module is a module for connection to a network such as the Internet, and may be an Ethernet module.

The short-distance communication module is a module for short-distance communication. Examples of the short-distance communication may include Bluetooth, Ultra Wideband (UWB), ZigBee, Near Field Communication (NFC), Wi-Fi Direct (WFD), infrared Data Association (IrDA), and the like.

Bluetooth is a standard technology for wireless communication devices that perform wireless communication within a short range, and using low power. UWB is a wireless communication technology used to transmit a large amount of data in a short period via a large spectrum frequency, and also using low power.

NFC is related to short-distance wireless connection using magnetic field induction between devices that are near each other, in every direction. WFD is a new version of a Wi-Fi technology and is mainly characterized by direct communication between devices. That is, although there is no hotspot, router, or access point (AP), if the devices use WFD, the devices may communicate with each other and share information therebetween. Also, unlike Bluetooth, WFD does not require a pairing procedure, may perform long-distance communication within a maximum distance of 200 m, and may perform 1:N communication with several devices.

ZigBee is one of the IEEE 802.15.4 standards that support short-distance communication. ZigBee is a technology for short-distance communication within a distance of 10 - 20 m and ubiquitous computing in a wireless networking field.

The communication unit 120 may receive identification (ID) information of the electronic paper 200 connected to the connection unit 110. The ID information may indicate unique information used to identify the electronic papers 200-1, 200-2, ..., 200-N, respectively. For example, the ID information may include a first ID code identifying the electronic paper 200-1 and a second ID code identifying the electronic paper 200-2.

The electronic paper 200 may include shift registers that store the ID information. A shift register is a register that shifts all bits stored in the shift register by one bit in every clock period. When the shift register is a linear register, a bit is inserted at one side of the shift register and another bit is removed at the other side of the shift register.

The communication unit 120 may transmit a shift instruction to a shift register of a first electronic paper of the electronic paper 200, where the first electronic paper is positioned at an outermost side in a first direction. The outermost side in the first direction may be a case in which the electronic paper 200 is stacked, and the first electronic paper is at the top of the stack. For convenience of description, it is presumed that the first electronic paper is at the top of the stack. The shift instruction indicates a specific instruction used to shift data leftward or rightward by one bit in the shift register. That is, the shift instruction may apply a clock pulse to the shift register to shift the bits stored therein.

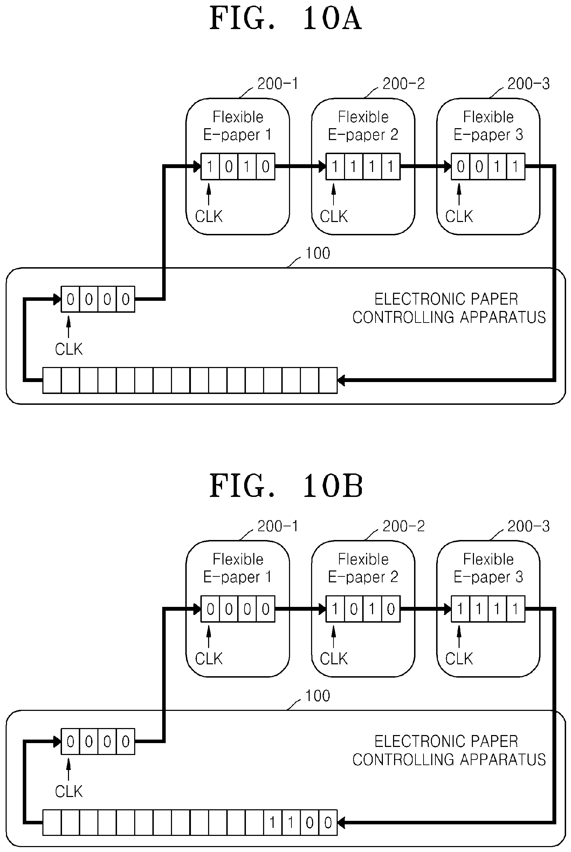

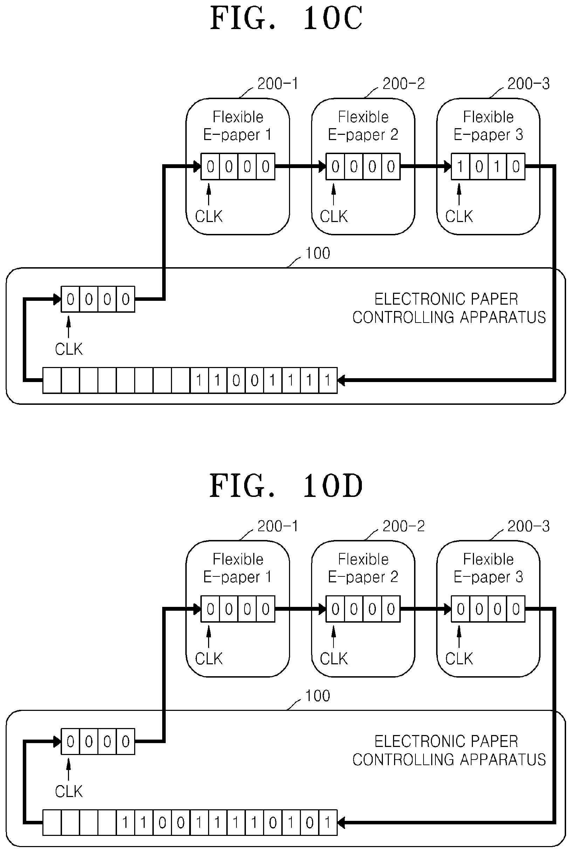

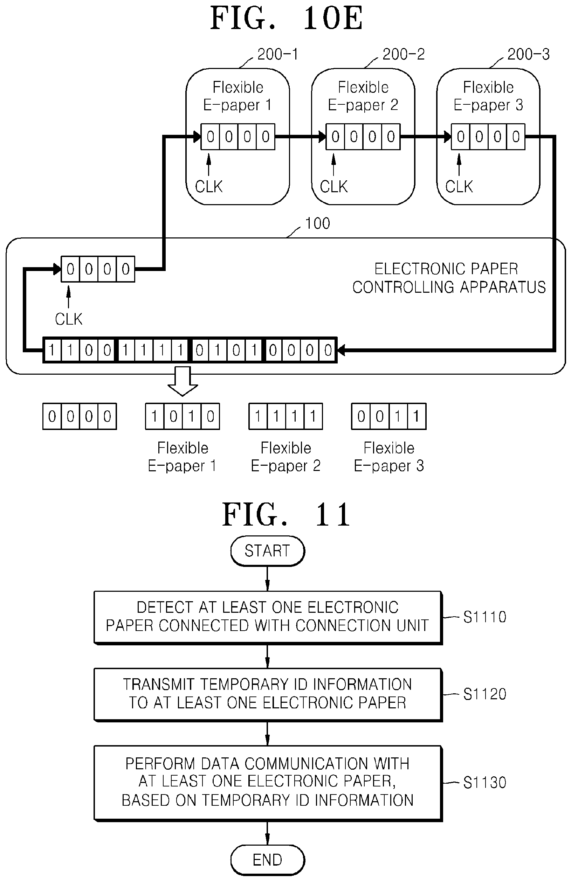

The communication unit 120 may sequentially receive one piece of ID information from a shift register of a second electronic paper positioned at an outermost side in a second direction. The outermost side in the second direction may be a case in which the electronic paper 200 is stacked, and the second electronic paper is at the bottom of the stack. For convenience of description, it is presumed that the second electronic paper is at the bottom of the stack. This is described in detail with reference to FIG. 10.

The communication unit 120 may transmit temporary ID information to the electronic paper 200 connected to the connection unit 110. That is, when the electronic paper 200 does not have ID information or the electronic paper controlling apparatus 100 is unable to recognize ID information of the electronic paper 200, the communication unit 120 may arbitrarily apply ID information to the electronic paper 200.

The temporary ID information may be used while the electronic paper 200 is connected to the connection unit 110. Thus, whenever the electronic paper 200 is connected with the electronic paper controlling apparatus 100, the electronic paper 200 may be given new temporary ID information.

The communication unit 120 may receive contents from the electronic paper 200. Also, the communication unit 120 may receive contents from the external device 300 (e.g., another electronic paper controlling apparatus, a server, a mobile terminal, a camera, etc.).

The communication unit 120 may transmit contents, which are selected by a user, to the electronic paper 200. The communication unit 120 may transmit at least one piece of content to the external device 300. The communication unit 120 may receive a predetermined key from the electronic paper 200. Here, the communication unit 120 may transmit predetermined data corresponding to the predetermined key to an electronic paper that has transmitted the predetermined key.

For example, it is assumed that each of an electronic paper 200-1, an electronic paper 200-2, and an electronic paper 200-3 has a predetermined key 'a' capable of accessing content A. When the electronic paper 200-1, the electronic paper 200-2, and the electronic paper 200-3 are connected to the connection unit 110, the electronic paper controlling apparatus 100 may receive the predetermined key 'a' from each of the electronic paper 200-1, the electronic paper 200-2, and the electronic paper 200-3. The electronic paper controlling apparatus 100 may perform authentication with respect to the predetermined key 'a', and then may transmit the content A to the electronic paper 200-1, the electronic paper 200-2, and the electronic paper 200-3. Also, the electronic paper controlling apparatus 100 may skip an authentication procedure with respect to the predetermined key 'a'. In this regard, it is possible to skip a procedure of receiving the predetermined key 'a' from each of the electronic paper 200-1, the electronic paper 200-2, and the electronic paper 200-3.

The power supply unit 130 may supply power to the electronic paper 200. That is, according to the present exemplary embodiment, the electronic paper 200-1, 200-2, ..., 200-N may receive power from the electronic paper controlling apparatus 100 so that a battery for the electronic paper 200-1, 200-2, ..., 200-N is not required to have a large size or high capacity. Thus, a size (e.g., a thickness) of the electronic papers 200-1, 200-2, ..., 200-N may be decreased.

The communication unit 120 of the electronic paper controlling apparatus 100 may receive information about the remaining battery life from the electronic paper 200. Here, the power supply unit 130 may automatically supply power to one or more of the electronic paper 200-1, 200-2, ..., 200-N having remaining battery life is less than a predetermined level.

The output unit 140 outputs an audio signal, a video signal, or an alarm signal. The output unit 140 may include a display unit 141, an alarm unit 142, an audio output module (not shown), and the like.

The display unit 141 displays information processed by the electronic paper controlling apparatus 100. For example, the display unit 141 may display a list of the electronic paper 200-1, 200-2, ..., 200-N included in the electronic paper 200 connected to the connection unit 110, a list of external devices connected to the connection unit 110, or a list of a plurality of pieces of content received from the electronic paper 200. Also, the display unit 141 may display a functions list of functions supported by the electronic paper controlling apparatus 100.

The functions supported by the electronic paper controlling apparatus 100 may include a contents list display function, an electronic papers list display function, an external devices list display function, a content transmission function, a content edit function (e.g., copying, moving, deleting, or generating content), a hand-writing input function, and a charge function.

In the present exemplary embodiment, a contents-list may include contents stored in the storage unit 160 of the electronic paper controlling apparatus 100, contents received from the at least one electronic paper 200, contents received from the external devices, and the like. Also, in the present exemplary embodiment, the content may include at least one of a still image, a moving picture, music, an application, and a document.

The display unit 141 may display a graphical user interface (GUI) that indicates a status of connection with the electronic paper 200 or an external device 300 connected to the electronic paper controlling apparatus 100. For example, the display unit 141 may provide a GUI that indicates a successful connection to or ongoing communication with the electronic paper 200 or the external device 300, or may display an icon that represents the electronic paper 200 or the external device 300, an icon that represents a position at which the electronic paper 200 or the external device 300 is connected, or the like.

The display unit 141 may display a GUI that indicates the remaining battery life of the electronic paper 200.

When the display unit 141 and a touch pad form a mutually-layered structure and are configured as a touch screen, the display unit 141 may be used as an input device as well as an output device. The display unit 141 may include at least one of a liquid crystal display (LCD), a thin film transistor-liquid crystal display (TFT-LCD), an organic light-emitting diode, a flexible display, a three-dimensional (3D) display), and an electrophoretic display. Also, according to a type of the electronic paper controlling apparatus 100, at least two display units 141 may exist. The touch screen may be formed to detect a position of a touch input, a touched area, and a touch input pressure. Also, the touch screen may detect an actual touch and a proximity-touch.

The "actual touch" indicates a case in which an object actually touches a screen, and the term "proximity-touch" indicates a case in which the object does not actually touch the screen, but approaches the screen and is within a predetermined distance from the screen. The object may be an instrument that is used to touch or to proximately touch a specific portion of a displayed screen. Examples of the object include an electronic pen, a finger, and the like.

The alarm unit 142 outputs an alarm signal that indicates the occurrence of an event in the electronic paper controlling apparatus 100. The alarm unit 142 may output an audio signal, a video signal, or another signal to indicate the occurrence. For example, the alarm unit 142 may output a vibration signal.

The alarm unit 142 may output an alarm signal corresponding to a status of connection with the electronic paper 200. The connection status may indicate a status in which the electronic paper 200 is connected with the connection unit 110, a status in which the electronic paper 200 is disconnected from the connection unit 110, a status in which the electronic paper controlling apparatus 100 currently performs data communication with the electronic paper 200, or the like.

According to the present exemplary embodiment, the alarm unit 142 may output an alarm signal corresponding to a connection status of the external device 300 to the electronic paper controlling apparatus 100.

When the at least one electronic paper 200 is connected to the connection unit 110 and is disconnected from the connection unit 110, the alarm unit 142 may output different alarm signals respectively indicating the connection and disconnection.

The user input unit 150 may be a key pad, a dome switch, a touch pad (that is, a contact-type electrostatic capacity touch pad, a pressure-type resistive touch screen, an infrared ray detection-type touch pad, a surface ultrasonic wave conduction-type touch pad, an integrated tension measurement-type touch pad, a piezoelectric effect-type touch pad, etc.), a jog wheel, a jog switch, and the like. In particular, when the touch pad forms a mutually-layered structure with the display unit 141, this structure may be called a touch screen.

In addition, the user input unit 150 may further include a layer (not shown) for an electronic pen input, a voice recognition unit (not shown), an image recognition unit (not shown), and a motion recognition unit (not shown). The voice recognition unit may recognize a voice of a user using a voice recognition engine and may deliver the recognized voice to the control unit 170. The image recognition unit may recognize an image of the user via a camera and may perform user authentication or the like with the recognized image. The motion recognition unit may recognize motion of the user via a camera and may generate a control command that corresponds to the recognized motion.

The user input unit 150 may receive data that is input by the user. For example, the user input unit 150 may receive a user selection corresponding to at least one function from among functions that are supported by the electronic paper controlling apparatus 100. Also, the user input unit 150 may receive a user selection corresponding to at least one piece of content included in a contents-list or a user selection with respect to at least one electronic paper 200 included in an electronic papers-list of the electronic paper 200-1...200-N.

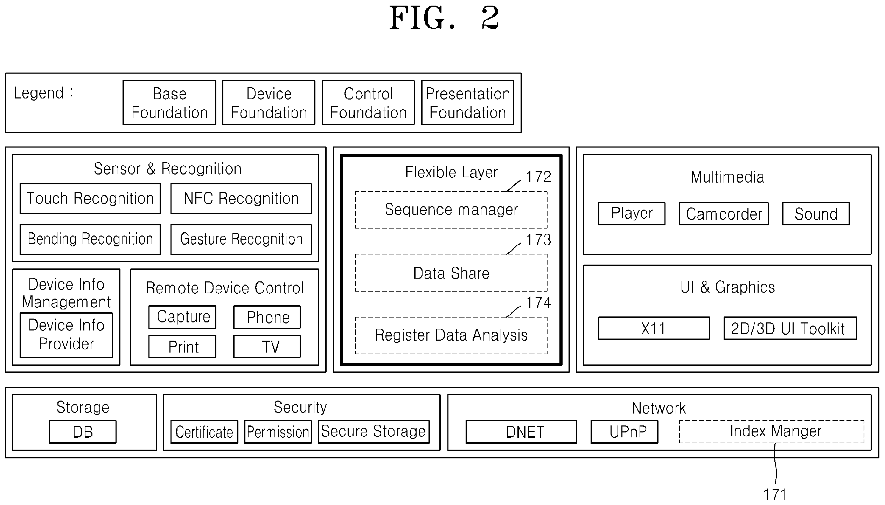

The storage unit 160 may store one or more programs used for processing and control by the control unit 170. This will be described with reference to FIG. 2.

FIG. 2 illustrates a configuration of software used to control electronic paper, according to an exemplary embodiment.

As illustrated in FIG. 2, programs that are stored in the storage unit 160 may be classified into a plurality of modules according to functions of the programs. For example, the programs may be classified into a sensor recognition module, a multimedia module, a graphic module, a security module, a network module, a flexible layer module, and the like. A function of each of the modules may be deduced by one of ordinary skill in the art, in consideration of titles of the modules, and thus, only an index management module 171, a sequence management module 172, a data share module 173, and a register data analysis module 174 are described here.

When the electronic paper 200 is connected to the connection unit 110, the index management module 171 of the network module may generate and deliver temporary ID information to the electronic paper 200.

The sequence management module 172 may control an output order of the electronic paper 200 based on unique ID information or the temporary ID information of the electronic paper 200 that is connected to the connection unit 110.

The data share module 173 manages data transmission to and reception from the electronic paper 200 that is connected to the connection unit 110.

The register data analysis module 174 may receive ID information from the electronic paper 200 that is connected to the connection unit 110, and may determine a connection order of electronic paper 200-1...200-N by using the received ID information.

The storage unit 160 may perform a function to temporarily store input/output data. For example, the input/output data may include content (e.g., a still image, a moving picture, music, a document, an application, etc.) obtained from the external device 300, content received from the at least one electronic paper 200, or the like.

The storage unit 160 may store the temporary ID information transmitted to the electronic paper 200, and the connection order of the electronic paper 200. Here, the storage unit 160 may associate the temporary ID information and the connection order of the electronic paper (i.e., the electronic papers 200-1, 200-2, ..., 200-N) and then may store the associated data. The connection order may be a position of the electronic paper 200-1...200-N in the stack of electronic paper 200, or may be a position relative to a reference electronic paper 200. For example, when the electronic paper 200-1 is at a top of a stack, the connection order of the electronic paper 200-1 may be "1" (*i.e.,* a first position in the stack). When the electronic paper 200-N is at a bottom of a stack, the connection order of the electronic paper 200-N may be "N" (*i.e.,* a last position in the stack). The connection order may, or may not, correspond to the ID discussed above, as the electronic paper 200 may be physically reordered by the user, or the ID may be changed by the electronic paper controlling apparatus 100.

The storage unit 160 may include at least one storage medium from among a flash memory-type storage medium, a hard disk-type storage medium, a multimedia card micro-type storage medium, card-type memories (e.g., an SD card, an XD memory, and the like), Random Access Memory (RAM), Static Random Access Memory (SRAM), Read-Only Memory (ROM), Electrically Erasable Programmable Read-Only Memory (EEPROM), Programmable Read-Only Memory (PROM) magnetic memory, a magnetic disc, and an optical disc. Also, the electronic paper controlling apparatus 100 may drive a remote storage function that performs a function of storing data in a remote location via a network such as the Internet.

The control unit 170 controls operations of the electronic paper controlling apparatus 100 and may individually and collectively control the connection unit 110, the communication unit 120, the power supply unit 130, the output unit 140, the user input unit 150, and the storage unit 160. Here, as described above, the control unit 170 may perform control functions by executing the programs that are stored in the storage unit 160.

For example, the control unit 170 may control the communication unit 120 to perform data communication with the electronic paper 200, based on ID information of the electronic paper 200. Here, the ID information may be the unique ID information received from the electronic paper 200.

The control unit 170 may determine the connection order of the electronic paper 200 connected to the connection unit 110, based on an order by which a plurality of pieces of ID information are received. This is described in detail with reference to FIG. 10.

According to another exemplary embodiment, the control unit 170 may also control the communication unit 120 to perform data communication with the electronic paper 200, based on temporary ID information. Here, the control unit 170 may control the communication unit 120 to sequentially transmit the temporary ID information to the electronic paper 200.

For example, the control unit 170 may control the communication unit 120 to sequentially transmit the temporary ID information in an order from a first electronic paper to a last electronic paper. Again, the first electronic paper may be a first electronic paper at a top of a stack of electronic paper and the last electronic paper may be a last electronic paper at a bottom of the stack. In this case, since the temporary ID information may be equally applied to the electronic paper 200, the control unit 170 may determine the connection order of the electronic paper 200 that is connected to the connection unit 110, based on the temporary ID information.

According to the present exemplary embodiment, the control unit 170 may also determine the connection order of the at least one electronic paper 200, based on a position of a terminal to which the electronic paper 200 is connected, where the terminal is among a plurality of terminals included in the connection unit 110.

For example, when an X-electronic paper is connected to a first terminal of the connection unit 110, a Y-electronic paper is connected to a second terminal of the connection unit 110, and a Z-electronic paper is connected to a third terminal of the connection unit 110, the control unit 170 may detect that electronic papers in an order of the X-electronic paper, the Y-electronic paper, and the Z-electronic paper that are connected to the connection unit 110. In order to control data exchange between the X-electronic paper, the electronic paper controlling apparatus 100 may control the input/output of the X-electronic paper by using the first terminal of the connection unit 110. According to the present exemplary embodiment, the control unit 170 may control a data input function of the electronic paper 200. That is, the control unit 170 may activate a user input function of the at least one electronic paper 200. Although the at least one electronic paper 200 includes a touch screen panel (TSP), a module that processes touch-input data may be included in the electronic paper controlling apparatus 100. Thus, the control unit 170 activates the user input function of the at least one electronic paper 200, so that the electronic paper controlling apparatus 100 may receive a user input from the at least one electronic paper 200.

The control unit 170 may activate a user input function of an electronic paper that is at a top of a stack of electronic paper 200. According to the present exemplary embodiment, the electronic paper controlling apparatus 100 may recognize a relative position of the electronic paper 200 by using a sensor or a terminal included in the connection unit 110.

The control unit 170 may determine an electronic paper of the electronic paper 200 as a master electronic paper, and may determine others of the electronic paper 200 as slave electronic papers. According to the present exemplary embodiment, the control unit 170 may determine an electronic paper of the electronic paper 200 as the master electronic paper, where the electronic paper includes a user input function. For example, the electronic paper controlling apparatus 100 may determine the electronic paper having a touch panel to be the master electronic paper.

According to another exemplary embodiment, the control unit 170 may determine an electronic paper as a master electronic paper, where the electronic paper is positioned at the top or bottom of a stack. For example, the electronic paper controlling apparatus 100 may determine an electronic paper, which is at the top of a stack, as the master electronic paper. Alternative exemplary embodiments for determining the master electronic paper may include determining the master electronic paper based on an electronic paper ID or based on content stored in the electronic paper.

In the present exemplary embodiment, the control unit 170 may output data. That is, the control unit 170 may output data via the output unit 140 of the electronic paper controlling apparatus 100 or may output data via the electronic paper 200. Here, the control unit 170 may control the master electronic paper so that data may be output via the master electronic paper.

For example, the control unit 170 may control an output of the master electronic paper so that at least one of a contents-list, a functions-list about functions supported by the electronic paper controlling apparatus 100, and an external devices-list may be displayed via the master electronic paper.

The contents-list may include at least one of content stored in the storage unit 160 of the electronic paper controlling apparatus 100, content received from the electronic paper 200, and content obtained from an external device. In the present exemplary embodiment, the content may include at least one of a still image, a moving picture, music, an application, and a document.

The function that is supported by the electronic paper controlling apparatus 100 may include at least one of a contents-list display function, an electronic papers-list display function, an external devices-list display function, a content transmission function, a content editing function (e.g., copying, moving, deleting, or generating content), a hand-writing input function, and a charge function.

The control unit 170 may control an output of the master electronic paper so that the contents-list may be displayed on a first region of the master electronic paper and the electronic papers-list may be displayed on a second region of the master electronic paper.

Also, the control unit 170 may control an output of the at least one electronic paper 200 so that, when the electronic paper 200 is disconnected from the electronic paper controlling apparatus 100, the electronic paper 200 may maintain its display screen at a time of the disconnection. When a display of the electronic paper 200 is an electrophoretic display, the electronic paper 200 may maintain its display screen before the disconnection although electricity supply from the electronic paper controlling apparatus 100 is discontinued or a separate control is not performed thereto.

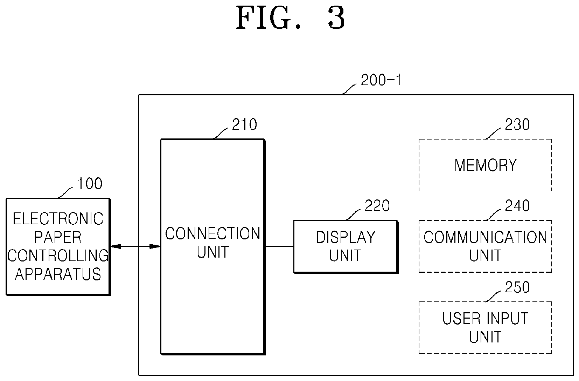

Hereinafter, the electronic paper 200-1 will be described in detail with reference to FIG. 3.

The electronic paper 200-1 is an electronic device capable of functioning as a paper. Unlike a conventional flat panel display that uses backlights to light pixels, the electronic paper 200-1 may use reflected light, like conventional paper. Thus, the electronic paper 200-1 may display text and images without consuming electricity. Also, unlike the flat panel display, the electronic paper 200-1 may be folded or bent.

FIG. 3 is a block diagram illustrating a configuration of the electronic paper 200-1, according to an exemplary embodiment.

As illustrated in FIG. 3, the electronic paper 200-1 may include a connection unit 210 and a display unit 220.

The connection unit 210 is a portion connectable to the electronic paper controlling apparatus 100. The connection unit 210 may have one of various shapes. For example, the connection unit 210 may have a hole shape, a convex structure, or a concave structure.

The connection unit 210 may include a plurality of connection terminals. For example, the connection unit 210 may include a communication terminal used to perform communication with the electronic paper controlling apparatus 100, an output terminal used to output data, an input terminal used to receive data, a charge terminal used to receive power from the electronic paper controlling apparatus 100, and the like.

The display unit 220 may display data, in response to a control signal of the electronic paper controlling apparatus 100 or in response to a user input. For example, the display unit 220 may display a functions-list of functions that are supported by the electronic paper controlling apparatus 100. The functions that are supported by the electronic paper controlling apparatus 100 may include at least one of a contents-list display function, an electronic papers-list display function, a content transmission function, a content copy function, a hand-writing input function, and a charge function.

Also, the display unit 220 may display an electronic papers-list or a contents-list of electronic papers that are connected with the electronic paper controlling apparatus 100. The contents-list may include at least one of content stored in the storage unit 160 of the electronic paper controlling apparatus 100, content received from the at least one electronic paper 200, and content obtained from an external device. In the present exemplary embodiment, the content may include at least one of a still image, a moving picture, music, an application, and a document.

The display unit 220 may display a GUI that indicates a status of connection to the at least one electronic paper 200 connected to the electronic paper controlling apparatus 100. For example, the display unit 220 may provide a GUI that indicates a successful with or an ongoing communication with the electronic paper 200, or may display an icon that represents the electronic paper 200, an icon that represents a position at which the electronic paper 200 is connected, or the like. The display unit 220 may display a GUI that indicates the remaining battery life of the at least one electronic paper 200.

According to the present exemplary embodiment, when the electronic paper 200-1 is disconnected from the electronic paper controlling apparatus 100, the display unit 220 may maintain its display screen when disconnected. Thus, a user may conveniently display data on the at least one electronic paper 200 and then may distribute the at least one electronic paper 200 to another user. Also, the user may check content such as an image, without printing the image.

When the display unit 220 and a touch pad form a mutually-layered structure and are configured as a touch screen, the display unit 220 may be used as an input device as well as an output device. According to the present exemplary embodiment, the display unit 220 may include at least one of an active-matrix organic light-emitting diode (AMOLED) display, an LCD, an electrophoretic display, and a 3D display. The electrophoretic display is formed by using a technology that involves displaying colors, text, and images by using minute nano-particles that move in a positive or negative direction when current is applied thereto.

According to another exemplary embodiment, the electronic paper 200-1 may include a memory 230, a communication unit 240, and a user input unit 250 as well as the connection unit 210 and the display unit 220. However, not all elements of FIG. 3 are necessary. That is, the electronic paper 200-1 may be embodied by more or fewer elements than the elements of FIG. 3.

The memory 230 may store data that is input/output by the electronic paper controlling apparatus 100. For example, the memory 230 may store content (e.g., a still image, a moving picture, music, a document, an application, and the like) obtained from the electronic paper controlling apparatus 100. In the present exemplary embodiment, the memory 230 may be a NAND flash memory.

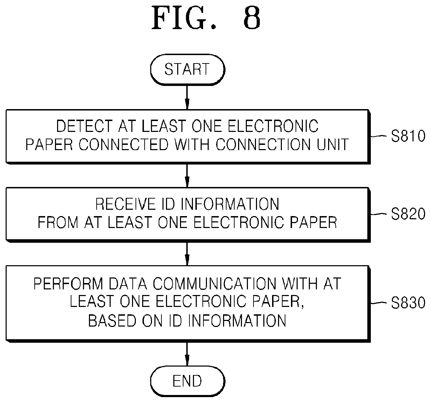

According to the present exemplary embodiment, the memory 230 may include a non-volatile memory that stores unique ID information of the electronic paper 200-1. Also, the memory 230 may include a shift register that stores the unique ID information of the electronic paper 200-1. Here, the unique ID information that is stored in the non-volatile memory may be copied to the shift register, in response to a control by the electronic paper 200-1 or the electronic paper controlling apparatus 100. Also, when shift instruction is received from the electronic paper controlling apparatus 100, the shift register sequentially shifts all bits of the stored ID information by one bit (alternatively, by an information unit having a predetermined number of bits), so that the ID information may be delivered to the electronic paper controlling apparatus 100. Also, the shift register may sequentially receive all parts of temporary ID information of a predetermined number of bits and may store the ID. The electronic paper controlling apparatus 100 may control the shift register to maintain the temporary ID information stored in the shift register. The detailed description thereof is provided below with reference to FIGS. 8 through 13.

According to the present exemplary embodiment, the memory 230 may store a predetermined key. The predetermined key may be a key that is used to request the electronic paper controlling apparatus 100 for predetermined data.

The communication unit 240 may include at least one module to perform data communication with the electronic paper controlling apparatus 100. For example, the communication unit 240 may include a module for short-distance communication. Examples of the short-distance communication may include Bluetooth, UWB, ZigBee, NFC, WFD, IrDA, and the like.

According to the present exemplary embodiment, the communication unit 240 may communicate with the electronic paper controlling apparatus 100 in a wired or wireless manner. For example, the communication unit 240 may transmit ID information of the electronic paper 200-1, which is stored in the memory 230, to the electronic paper controlling apparatus 100. The ID information may be transmitted at the head of a data stream, along with content stored in the memory 230.

If the memory 230 does not separately store the ID information, the communication unit 240 may receive the temporary ID information from the electronic paper controlling apparatus 100. The communication unit 240 may transmit a predetermined key to the electronic paper controlling apparatus 100 and may receive predetermined data corresponding to the predetermined key from the electronic paper controlling apparatus 100.

The communication unit 240 may transmit content stored in the memory 230 to an external device (e.g., a printer, or the like). In this case, a user may easily print the content, which is displayed on the electronic paper 200-1, by using a printer.

The user input unit 250 may receive data that is input by a user. In the present exemplary embodiment, the user input unit 250 of the electronic paper 200-1 may have a limited input function. That is, while the electronic paper 200-1 includes a TSP, a module that processes touch-input data may be included in the electronic paper controlling apparatus 100, so that the input function for a user may be limited.

The user input unit 250 may receive user selection with respect to at least one piece of content included in a contents-list or user selection with respect to at least one electronic paper included in an electronic papers-list.

According to the present exemplary embodiment, the user input unit 250 may have a sensor for detecting a touch input. An example of the sensor for detecting a touch on a touch screen may include a tactile sensor.

The tactile sensor is a sensor that detects contact with a specific object by a detection level equal to or greater than a detection level of a person. The tactile sensor may detect various types of information, such as the roughness of a contact surface, the hardness of a contact object, the temperature of a contact point, and the like.

Also, the sensor for detecting the touch on the touch screen may detect a touch-drag. Here, the term "touch-drag" indicates a case in which a touched point is moved while the touch is maintained. That is, the term "touch-drag" indicates the case in which the touched point is dragged while the touch is maintained. In this regard, an act of tapping a predetermined point on a display screen by using a pointer may be called "tap-touch", which is different from the touch-drag. In this case, the sensor (e.g., the tactile sensor) for detecting a touch may detect a drag direction, a drag speed, a drag length, and the like from the touch-drag.

Another example of the sensor for detecting the touch on the touch screen may include a proximity sensor. The proximity sensor indicates a sensor that detects an object reaching a predetermined detection surface or an object existing within a proximate range, by using an electro-magnetic field or infrared rays, as opposed to mechanical contact. Thus, a lifetime of the proximity sensor is considerably longer than the tactile sensor, and usability of the proximity sensor is high.

Examples of the proximity sensor include a transmissive-type photoelectric sensor, a direct reflection-type photoelectric sensor, a mirror reflection-type photoelectric sensor, a high frequency oscillation-type proximity sensor, an electrostatic capacity-type proximity sensor, a magnetic-type proximity sensor, an infrared ray-type proximity sensor, and the like.

The user input unit 250 may further include a bending sensor (not shown) to detect a bending motion.

The bending motion means deformation of a display device. In the present exemplary embodiment, the bending motion may include various motions. The bending sensor may obtain information about a bending position (a coordinates-value), a bending direction, a bending angle, a bending strength, a bending speed, a bending count, and a time of occurrence of the bending motion.

For example, the bending sensor may obtain the information about the bending position and the bending direction using the fact that a pressure of a bent portion is different from a pressure of an unbent portion. Also, the bending sensor may obtain the information about the bending angle, a bending radius, the bending count, the bending speed, and the like, based on a strength variation of the bent portion. The bending sensor may measure a bending speed of each portion using an acceleration sensor and then may connect portions having a large speed variation, so that the bending sensor may obtain the information about the bending position and the bending angle.

Although not illustrated in the electronic paper 200-1, when a plurality of electronic papers, including the electronic paper 200-1, overlap with each other, the user input unit 250 may further include a sensor for detecting an overlap order (or a disposal order). For example, a radio frequency (RF)-ID tag and/or an RF-ID transmitting and receiving unit may be arranged on and/or under the electronic paper 200-1. The electronic paper 200-1 may detect an RF-ID tag of another electronic paper that is positioned above or below the electronic paper 200-1 and thus may transmit a position (related to above or below) of the RF-ID tag, tag information of the RF-ID tag, and tag information of the electronic paper 200-1 to the electronic paper controlling apparatus 100. Then, the electronic paper controlling apparatus 100 may obtain the quantity of electronic papers, ID information of each of the electronic papers, a disposal order of the electronic papers, profile information about performance and specification of each of the electronic papers, or the like, by using a plurality of pieces of received tag information.

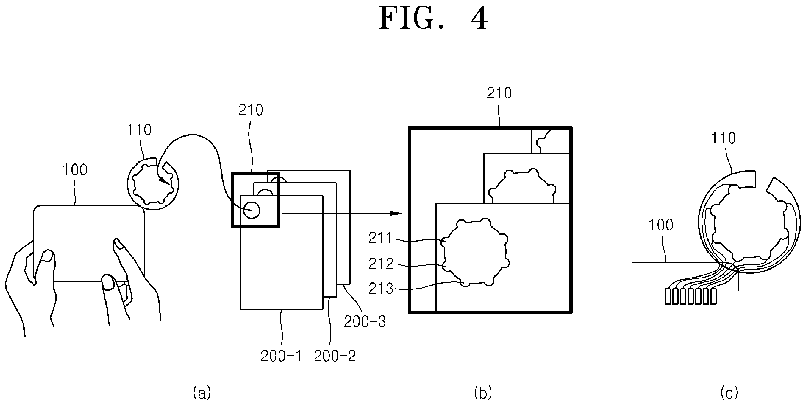

Hereinafter, a connection structure between the electronic paper controlling apparatus 100 and the electronic paper 200 is described in detail with reference to FIGS. 4 through 7.

FIG. 4 illustrates a ring-shaped connection unit according to an exemplary embodiment.

As illustrated in FIG. 4(a), the connection unit 110 of the electronic paper controlling apparatus 100 may have a ring shape that has a plurality of grooves in an inner circumferential surface, and the electronic paper 200 may have a hole. Thus, the connection unit 110 of the electronic paper controlling apparatus 100 may penetrate through the hole of the electronic paper 200 and then may fix the electronic paper 200 into one of the plurality of grooves.

As illustrated in FIG. 4(b), the hole of a connection unit 210 of the at least one electronic paper 200 may have a plurality of grooves. Each of the plurality of grooves may include a communication terminal 211 used to perform communication with the electronic paper controlling apparatus 100, a charge terminal 212 used to receive power from the electronic paper controlling apparatus 100, or the like.

Also, as illustrated in FIG. 4(c), each of the plurality of grooves of the connection unit 110 may be internally connected to a terminal of the electronic paper controlling apparatus 100.

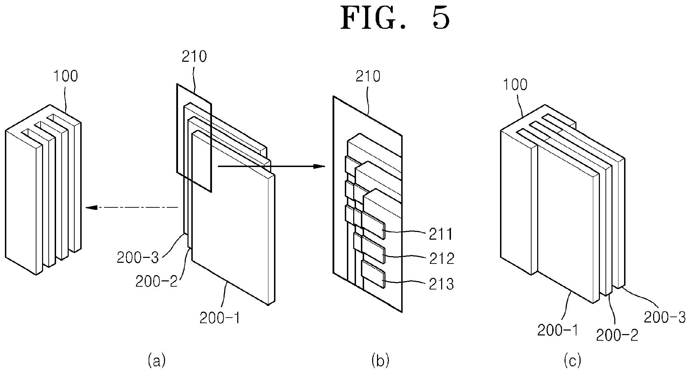

FIG. 5 illustrates a slot-shaped connection unit according to another exemplary embodiment.

As illustrated in FIG. 5(a), the connection unit 110 of the electronic paper controlling apparatus 100 may have a slot structure in which electronic papers of the at least one electronic paper 200 may be inserted. Each of the slots included in the slot structure of the connection unit 110 of the electronic paper controlling apparatus 100 may include a terminal for power, communication, data input/output, and the like.

As illustrated in FIG. 5(b), a connection unit 210 of the at least one electronic paper 200 may have a connection terminal matching a slot-shape of the electronic paper controlling apparatus 100. The connection terminal of the at least one electronic paper 200 may include a communication terminal 211 used to perform communication with the electronic paper controlling apparatus 100, a charge terminal 212 used to receive power from the electronic paper controlling apparatus 100, an output terminal 213 used to output data, an input terminal (not shown) used to receive data, and the like.

As illustrated in FIG. 5(c), a plurality of electronic papers 200-1, 200-2, and 200-3 may be inserted into the slots of the electronic paper controlling apparatus 100, respectively.

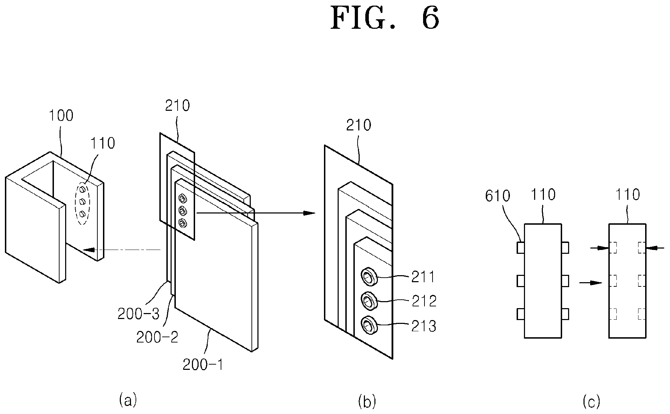

FIG. 6 illustrates a pin-shaped connection unit according to an exemplary embodiment.

As illustrated in FIG. 6(a), a connection unit 110 of the electronic paper controlling apparatus 100 may have a pin structure. That is, the connection unit 110 having a pin-shape that penetrates through a hole of the electronic paper 200 may be arranged on a side surface of the electronic paper controlling apparatus 100. According to the present exemplary embodiment, a plurality of pins for communication, charge, data input/output, and the like may be arranged on the side surface of the electronic paper controlling apparatus 100.

As illustrated in FIG. 6(b), the at least one electronic paper 200 may include the hole. When the electronic paper controlling apparatus 100 has the plurality of pins, the electronic paper 200 may include a plurality of holes that correspond to the plurality of pins, respectively. Each of the plurality of holes may have a communication terminal 211 used to perform communication with the electronic paper controlling apparatus 100, a charge terminal 212 used to receive power from the electronic paper controlling apparatus 100, an output terminal 213 used to output data, an input terminal (not shown) used to receive data, or the like. Also, at least one groove may be formed inside a hole of the respective electronic paper 200.

According to the present exemplary embodiment, as illustrated in FIG. 6(c), a plurality of projections 610 having a pin shape may be formed on the connection unit 110 of the electronic paper controlling apparatus 100. When the connection unit 110 having a pin-shape is inserted into the hole of the at least one electronic paper 200, the plurality of projections 610 may be pushed inward and, when the insertion is complete, the plurality of projections 610 may project outward and may be coupled to the grooves that are arranged in the inner circumferential surface of the hole of the at least one electronic paper 200.

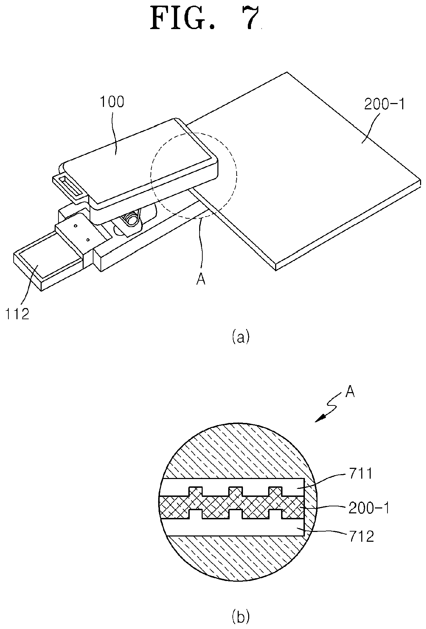

FIG. 7 illustrates a clip-shaped connection unit according to another exemplary embodiment.

As illustrated in FIG. 7(a), the connection unit 110 of the electronic paper controlling apparatus 100 may have a clip (a forceps) shape capable of clipping electronic papers of the at least one electronic paper 200.

As illustrated in FIG. 7(b), that is, the connection unit 110 of the electronic paper controlling apparatus 100 may have a first surface that has a plurality of grooves 711 and a second surface that is connected to a side of the first surface and that has a plurality of projections 712 corresponding to the plurality of grooves 711 in the first surface, respectively. The plurality of grooves 711 may not correspond to the plurality of projections 712.

According to the present exemplary embodiment, the electronic paper 200 may have a plurality of corresponding projections formed on a first surface of the electronic paper 200, and may have a plurality of grooves formed in a second surface of the electronic paper 200.

A plurality of projections of a first electronic paper 200-1 of the electronic paper 200, which is positioned at an outermost side in a first direction, may be inserted into the plurality of grooves 711 of the connection unit 110 of the electronic paper controlling apparatus 100, and a plurality of grooves of an N^{th} electronic paper 200-N of the electronic paper 200, which is positioned at an outermost side in a second direction, may be coupled with the plurality of projections 712 of the connection unit 110 of the electronic paper controlling apparatus 100. In a case of electronic papers between the first electronic paper 200-1 and the N^{th} electronic paper 200-N, the electronic papers are connected with the adjacent electronic papers.

For example, it is assumed that an electronic paper X and an electronic paper Y are connected with the electronic paper controlling apparatus 100, a plurality of projections of the electronic paper X are inserted into the plurality of grooves 711 of the electronic paper controlling apparatus 100, a plurality of projections of the electronic paper Y are connected with a plurality of grooves of the electronic paper X, and then, a plurality of grooves of the electronic paper Y are connected with the plurality of projections 712 of the electronic paper controlling apparatus 100.

FIG. 8 is a flowchart of a method of controlling an electronic paper, according to an exemplary embodiment.

Referring to FIG. 8, the method includes operations that are processed by the electronic paper controlling apparatus 100 shown in FIG. 1.

The electronic paper controlling apparatus 100 may detect the electronic paper 200 that is connected to the connection unit 110 (operation S810). In this case, the electronic paper controlling apparatus 100 may receive ID information from the electronic paper 200 (operation S820).

The electronic paper controlling apparatus 100 may perform data communication with the electronic paper 200, based on the ID information (operation S830). For example, the electronic paper controlling apparatus 100 may transmit at least one of an electronic papers-list of electronic papers included in the electronic paper 200 connected to the connection unit 110, a contents-list about one or more pieces of content received from the electronic paper 200, and a functions-list of functions supported by the electronic paper controlling apparatus 100.

Also, the electronic paper controlling apparatus 100 may transmit a control command to the electronic paper 200 to control the electronic paper 200. That is, the electronic paper controlling apparatus 100 may transmit a control command to the electronic paper 200 so that the electronic paper 200 may display predetermined content.

The electronic paper controlling apparatus 100 may supply power to the electronic paper 200, based on the ID information of the electronic paper 200.

Here, according to the present exemplary embodiment, the electronic paper controlling apparatus 100 may collectively supply power to all electronic papers that are connected with the connection unit 110 or may supply power only to an electronic paper whose remaining battery life is less than a predetermined level.

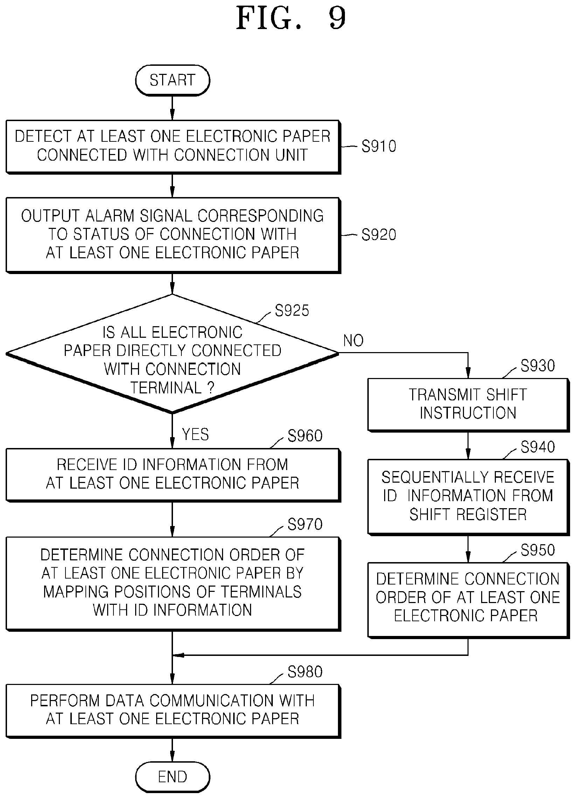

FIG. 9 is a flowchart of a method of receiving ID information from the at least one electronic paper 200, according to an exemplary embodiment.

As illustrated in FIG. 9, the electronic paper controlling apparatus 100 may detect the electronic paper 200 connected to the connection unit 110. Here, the electronic paper controlling apparatus 100 may detect the quantity of electronic paper and connection positions of the electronic paper connected to the connection unit 110.

The electronic paper controlling apparatus 100 may output an alarm signal corresponding to a connection status of the electronic paper 200 (operation S920). The connection status may indicate a status in which the electronic paper 200 is connected with the connection unit 110, a status in which the electronic paper 200 is disconnected from the connection unit 110, a status in which the electronic paper controlling apparatus 100 currently performs data communication with the electronic paper 200, or the like.

For example, when the electronic paper controlling apparatus 100 detects connection to the electronic paper 200, the electronic paper controlling apparatus 100 may output an audio signal, a video signal (GUI), a vibration signal, or the like and thus may inform a user that one electronic paper 200 is connected with the connection unit 110.

In operation S925, it may be determined whether all of the electronic paper 200 is directly connected to the electronic paper controlling apparatus 100. According to the present exemplary embodiment, when at least one electronic paper 200 is not directly connected with a connection terminal of the electronic paper controlling apparatus 100 (or, when each of a plurality of electronic papers is not connected with at least one connection terminal or connection pin of the electronic paper controlling apparatus 100), the electronic paper controlling apparatus 100 may transmit a shift instruction to a shift register of the electronic paper 200 (operation S930). Here, the direct connection may mean a status in which an electronic paper and the electronic paper controlling apparatus 100 are sufficiently close to each other or directly contact each other so that a connection between the electronic paper and the electronic paper controlling apparatus 100 is not short-circuited.

Also, in the method of FIG. 9, the electronic paper controlling apparatus 100 determines whether all electronic papers are directly connected with the connection terminal. However, for convenience of description, only a single determination is illustrated in the flowchart of FIG. 9.

For example, when the connection unit 110 has the clip shape, as shown in FIG. 7, an electronic paper in a middle of a stack of electronic paper may not be directly connected with the electronic paper controlling apparatus 100. Here, although the electronic paper cannot be directly connected with the electronic paper controlling apparatus 100, the electronic paper may be connected with the electronic paper controlling apparatus 100 via another electronic paper.

In this case, the electronic paper controlling apparatus 100 sequentially receives a plurality of pieces of ID information of electronic papers connected to the connection unit 110 from the shift register (operation S940). That is, the electronic paper controlling apparatus 100 may control unique ID information, which is stored in a non-volatile memory, to be copied to the shift register of the electronic paper 200. The electronic paper controlling apparatus 100 may transmit a shift instruction with respect to the ID information that is copied to the shift register of the electronic paper 200. According to the shift instruction transmitted to the electronic paper 200, the electronic paper controlling apparatus 100 may sequentially receive a plurality of pieces of ID information in an order from shift registers of electronic paper in the stack of electronic paper 200.

The electronic paper controlling apparatus 100 may determine a connection order of the electronic paper in the stack that are connected to the connection unit 110, based on the plurality of pieces of ID information that are received from the shift registers (operation S950). This is described in detail with reference to FIG. 10.

According to the present exemplary embodiment, when a plurality of electronic papers is connected with a plurality of terminals included in the connection unit 110, respectively, the electronic paper controlling apparatus 100 may receive a plurality of pieces of unique ID information from the plurality of electronic papers (operation S960).

For example, when the connection unit 110 has a ring shape that has a plurality of grooves in an inner circumferential surface (refer to FIG. 4), has a slot structure to which the at least one electronic paper 200 is inserted (refer to FIG. 5), or has a pin structure that penetrates a hole of the at least one electronic paper 200 (refer to FIG. 6), the electronic paper controlling apparatus 100 may receive the plurality of pieces of unique ID information from the plurality of electronic papers. Here, the electronic paper controlling apparatus 100 may determine a connection order of the plurality of electronic papers by mapping positions of the plurality of terminals included in the connection unit 110 with the plurality of pieces of unique ID information (operation S970).

The electronic paper controlling apparatus 100 may perform data communication with the at least one electronic paper 200, based on the ID information of the at least one electronic paper 200 (operation S980).

FIGS. 10A through 10E are diagrams related to a method of determining a connection order of one or more electronic papers, according to an exemplary embodiment.

According to the present embodiment, the electronic paper controlling apparatus 100 may receive ID information of one or more electronic papers via shift registers of the at least one electronic paper 200.

As illustrated in FIG. 10A, a first electronic paper 200-1, a second electronic paper 200-2, and a third electronic paper 200-3 may be sequentially connected with the electronic paper controlling apparatus 100. Here, the first electronic paper 200-1, the second electronic paper 200-2, and the third electronic paper 200-3 may include the shift registers, respectively, which respectively store ID information. In this regard, the plurality of pieces of ID information, which are stored in the shift registers of the first electronic paper 200-1, the second electronic paper 200-2, and the third electronic paper 200-3, respectively, may be copied from a plurality of pieces of unique ID information that are maintained in non-volatile memories of the first electronic paper 200-1, the second electronic paper 200-2, and the third electronic paper 200-3, in response to a control by the electronic paper controlling apparatus 100.

The ID information of the first electronic paper 200-1 may have a value of '1010' stored in the shift register of the first electronic paper 200-1, the ID information of the second electronic paper 200-2 may have a value of '1111' stored in the shift register of the second electronic paper 200-2, and the ID information of the third electronic paper 200-3 may have a value of '0011' stored in the shift register of the third electronic paper 200-3.

The electronic paper controlling apparatus 100 may transmit a shift instruction to a shift register of the first electronic paper 200-1. In this case, the ID information stored in the shift register of the first electronic paper 200-1 may be shifted by one bit (alternatively, shifted by an information unit having a predetermined number of bits), and accordingly, the ID information of each of the second electronic paper 200-2 and the third electronic paper 200-3 may also be shifted by one bit (alternatively, shifted by an information unit having a predetermined number of bits).

Here, the ID information that is shifted by a predetermined period is transmitted to the electronic paper controlling apparatus 100. That is, the electronic paper controlling apparatus 100 receives values of'1100 1111 0101 0000' from the third electronic paper 200-3 as the shift registers are shifted. '0000' is a value (or, a sequence) that is transmitted when the electronic paper controlling apparatus 100 transmits the shift instruction, and any value that may differ from the plurality of pieces of unique ID information of the first electronic paper 200-1, the second electronic paper 200-2, and the third electronic paper 200-3 may be used by the electronic paper controlling apparatus 100. When the value '0000' is received, the electronic paper controlling apparatus 100 may recognize all ID information of the first electronic paper 200-1, the second electronic paper 200-2, and the third electronic paper 200-3, which are connected with the connection unit 110. Thus, the electronic paper controlling apparatus 100 may exclude the value of '0000' and may extract the values of '1010', '1111', and '0011' in a reverse direction, which correspond to the plurality of pieces of ID information of the first electronic paper 200-1, the second electronic paper 200-2, and the third electronic paper 200-3, from the values of '1100 1111 0101' that are sequentially received. In another exemplary embodiment, bits of the ID information of each of the first electronic paper 200-1, the second electronic paper 200-2, and the third electronic paper 200-3 may be stored in each of the shift registers in an opposite order, so that, unlike FIGS. 10A through 10E, the plurality of pieces of ID information received in response to the shift instruction may be received in the opposite order.

FIG. 11 is a flowchart of a method of controlling an electronic paper, according to another exemplary embodiment.

Referring to FIG. 11, the method includes operations that are processed by the electronic paper controlling apparatus 100 shown in FIG. 1.

The electronic paper controlling apparatus 100 may detect the electronic paper 200 connected to the connection unit 110 (operation S1110). When unique ID information is not assigned to the at least one electronic paper 200 that is connected to the connection unit 110, or when the electronic paper controlling apparatus 100 cannot receive the unique ID information, the electronic paper controlling apparatus 100 may transmit temporary ID information to the electronic paper 200 (operation S1120).

In the present exemplary embodiment, the temporary ID information may be used while the electronic paper 200 is connected with the electronic paper controlling apparatus 100. Thus, in the present exemplary embodiment, the temporary ID information is newly assigned whenever the electronic paper 200 is connected to the electronic paper controlling apparatus 100, and when the electronic paper 200 is disconnected from the electronic paper controlling apparatus 100, the temporary ID information may be nullified.

The electronic paper controlling apparatus 100 may perform data communication with the electronic paper 200, based on the temporary ID information (operation S1130). That is, the electronic paper controlling apparatus 100 may determine a connection order of one or more electronic papers of the electronic paper 200 connected to the electronic paper controlling apparatus 100, by using the transmitted temporary ID information.

The electronic paper controlling apparatus 100 may supply power to the electronic paper 200, based on the temporary ID information. Here, according to the present exemplary embodiment, the electronic paper controlling apparatus 100 may collectively supply power to all electronic papers that are connected to the connection unit 110 or may supply power to only electronic paper having remaining battery life less than a predetermined level.

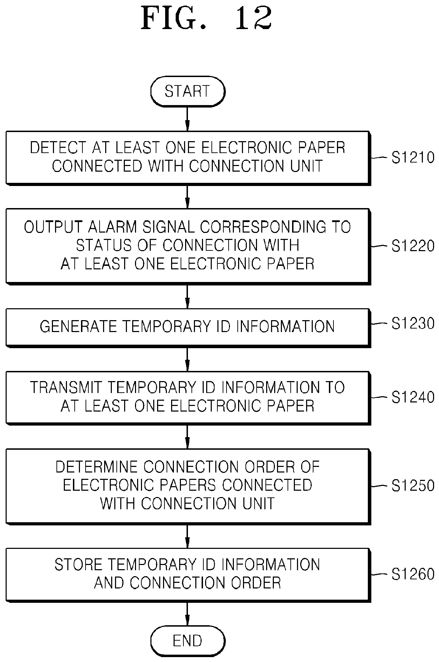

FIG. 12 is a flowchart of a method of determining a connection order of electronic papers by using temporary ID information, according to an exemplary embodiment.

As illustrated in FIG. 12, the electronic paper controlling apparatus 100 may detect the electronic paper 200 connected to the connection unit 110 (operation S1210). Here, according to the present exemplary embodiment, the electronic paper controlling apparatus 100 may detect the quantity of electronic papers and connection positions of the electronic papers that are connected with the connection unit 110.

The electronic paper controlling apparatus 100 may output an alarm signal corresponding to a connection status with the electronic paper 200 (operation S1220). The connection status may indicate a status in which the electronic paper 200 is connected with the connection unit 110, a status in which the electronic paper 200 is disconnected from the connection unit 110, a status in which the electronic paper controlling apparatus 100 currently performs data communication with the at least one electronic paper 200, or the like.

For example, when the electronic paper controlling apparatus 100 detects the connection with the electronic paper 200, the electronic paper controlling apparatus 100 may output an audio signal, a video signal (GUI), a vibration signal, or the like and thus may inform a user that the electronic paper 200 is connected to the connection unit 110.

The electronic paper controlling apparatus 100 may generate the temporary ID information (operation S1230). For example, the electronic paper controlling apparatus 100 may generate a plurality of pieces of temporary ID information which correspond to the quantity of the electronic papers connected to the electronic paper controlling apparatus 100.

The electronic paper controlling apparatus 100 may transmit the temporary ID information to the electronic paper 200 (operation S1240).

The electronic paper controlling apparatus 100 may sequentially transmit the plurality of pieces of temporary ID information in an order from a first electronic paper positioned at a top of a stack of electronic paper to a last electronic paper positioned at a bottom of the stack of electronic paper.

The electronic paper controlling apparatus 100 may determine a connection order of the electronic papers using the plurality of pieces of temporary ID information. That is, the electronic paper controlling apparatus 100 may determine the connection order of the electronic papers by mapping the plurality of pieces of temporary ID information with positions of the one or more electronic papers.

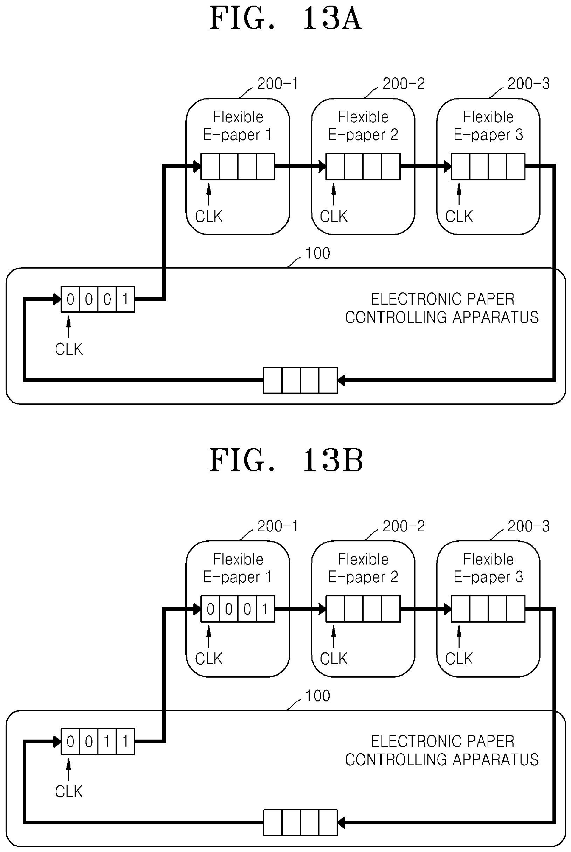

The electronic paper controlling apparatus 100 may store the plurality of pieces of temporary ID information and information about the connection order of the electronic papers (operation S1260). Afterward, the electronic paper controlling apparatus 100 may perform data communication with the electronic paper 200 using the plurality of pieces of temporary ID information and the connection order. This is described in detail with reference to FIGS. 13A to 13E.

FIGS. 13A through 13E are diagrams illustrating a method of providing temporary ID information to an electronic paper, according to an exemplary embodiment.

As illustrated in FIG. 13A, the electronic paper controlling apparatus 100 may transmit a predetermined sequence before transmitting the temporary ID information. The predetermined sequence is a value used to determine whether a plurality of pieces of temporary ID information are allocated to all electronic papers connected with the connection unit 110. Here, the predetermined sequence is different from the temporary ID information to be allocated to the electronic paper. For example, it is assumed that the predetermined sequence is '0001'. '0001' is a value (or, a sequence) that is transmitted when the electronic paper controlling apparatus 100 transmits the shift instruction, and any value that may differ from the plurality of pieces of unique ID information of the first electronic paper 200-1, the second electronic paper 200-2, and the third electronic paper 200-3 may be used by the electronic paper controlling apparatus 100.

Since the electronic paper controlling apparatus 100 is not able to recognize the number of electronic papers that are connected with the connection unit 110, the electronic paper controlling apparatus 100 may generate the plurality of pieces of temporary ID information, e.g., '0011', '0101', '1111', ..., until the predetermined sequence '0001' is received. As illustrated in FIGS. 13A to 13C, until assignment, the ID information of the electronic paper 200-1, 200-2, and 200-3 is unknown, and thus the values of the shift registers are illustrated to be blank. In another exemplary embodiment, the electronic paper controlling apparatus 100 may not generate the temporary ID information whenever the temporary ID information is required, but may store temporary identifiers in the storage unit 160, where the number of temporary identifiers corresponds to a maximum number of electronic papers that can be simultaneously connected to the electronic paper controlling apparatus 100. Here, the electronic paper controlling apparatus 100 may sequentially apply the temporary identifiers to the electronic papers.

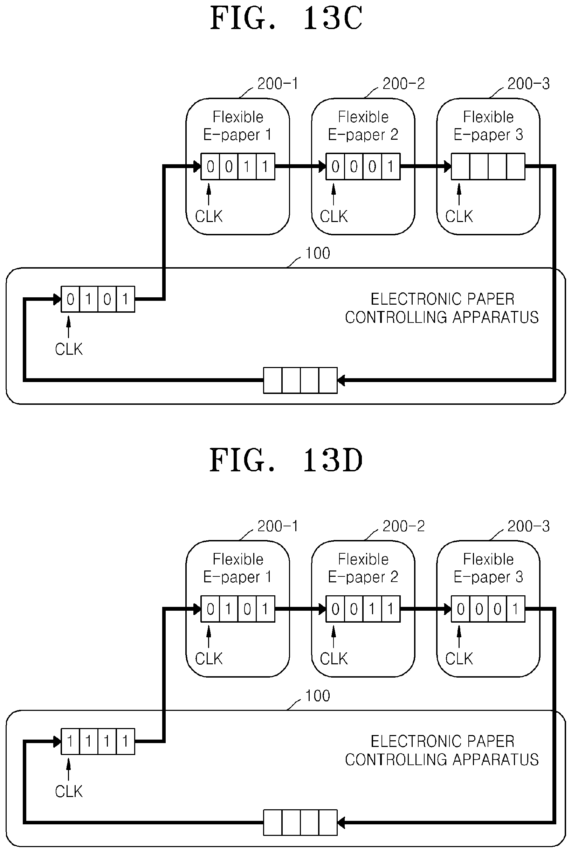

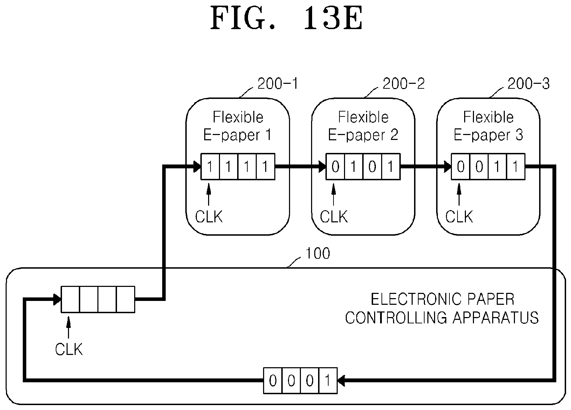

As illustrated in FIG. 13B, the electronic paper controlling apparatus 100 transmits the predetermined sequence '0001' to a first electronic paper 200-1, and then as illustrated in FIGS. 13C, 13D, and 13E, the electronic paper controlling apparatus 100 sequentially transmits the plurality of pieces of temporary ID information '0011', '0101', '1111' to the first electronic paper 200-1.

In this case, as illustrated in FIG. 13E, when the electronic paper controlling apparatus 100 receives the predetermined sequence '0001', the electronic paper controlling apparatus 100 may recognize that the plurality of pieces of temporary ID information are allocated to the electronic papers, respectively. That is to say, once the predetermined sequence '0001' is detected, the electronic paper controlling apparatus 100 may determine that the predetermined sequence '0001' has propagated through all the electronic paper. Accordingly, the electronic paper controlling apparatus 100 may determine the number of pieces of temporary ID information and may distinguish between the plurality of pieces of temporary ID information that are mapped according to a disposal order of the electronic papers. When the plurality of pieces of temporary ID information are all allocated, the electronic paper controlling apparatus 100 may transmit a temporary ID information storage command to each of the electronic papers so that each of the electronic papers may store and maintain the temporary ID information.

In this regard, the first electronic paper 200-1 may store '1111' in its shift register, a second electronic paper 200-2 may store '0101' in its shift register, and a third electronic paper 200-3 may store '0011' in its shift register.

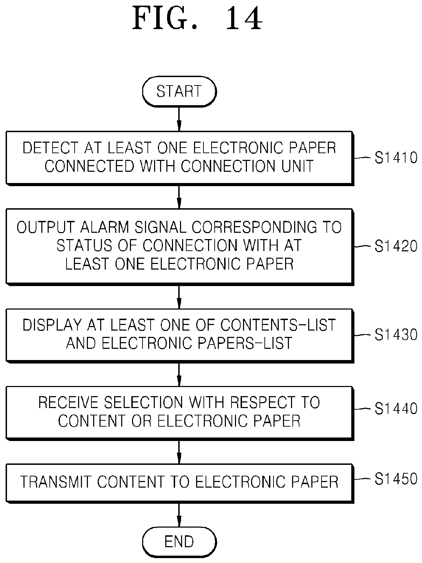

FIG. 14 is a flowchart of a method of transmitting content to an electronic paper, according to an exemplary embodiment.

As illustrated in FIG. 14, the electronic paper controlling apparatus 100 may detect the electronic paper 200 connected to the connection unit 110 (operation S1410). The electronic paper controlling apparatus 100 may detect the quantity of electronic papers and connection positions of the electronic papers connected with the connection unit 110. The method by which the electronic paper controlling apparatus 100 determines a connection order of the electronic papers is described above, thus, detailed descriptions thereof are omitted here.

The electronic paper controlling apparatus 100 may output an alarm signal corresponding to a connection status of the electronic paper 200 (operation S1420). The connection status may indicate a status in which the electronic paper 200 is connected with the connection unit 110, a status in which the electronic paper 200 is disconnected from the connection unit 110, a status in which the electronic paper controlling apparatus 100 currently performs data communication with the electronic paper 200, or the like.

The electronic paper controlling apparatus 100 may display at least one of a contents-list and an electronic papers-list (operation S1430). The contents-list may include stored in the storage unit 160 of the electronic paper controlling apparatus 100, content received from the electronic paper 200, and content obtained from the external device 300. The electronic papers-list may indicate a list of electronic papers that are connected to the connection unit 110, for example according to ID of the electronic papers and/or the ordering of the electronic papers.

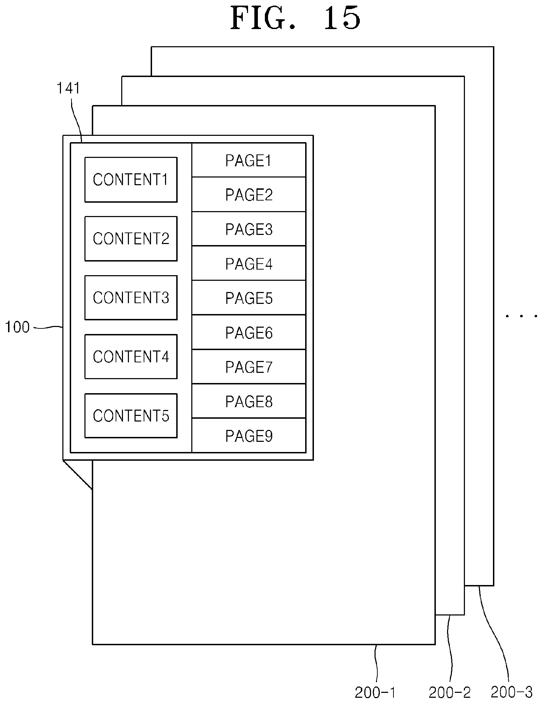

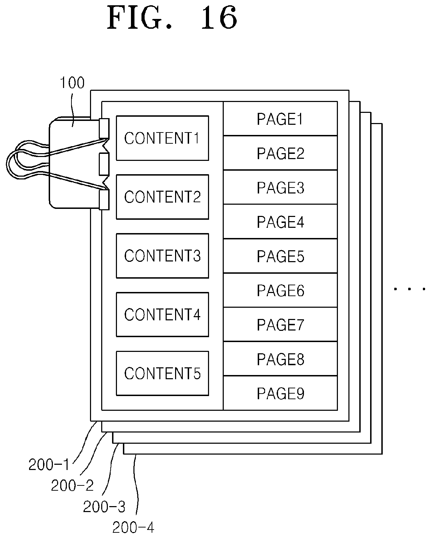

The electronic paper controlling apparatus 100 may display the contents-list or the electronic papers-list via the output unit 140 of the electronic paper controlling apparatus 100 or may display the contents-list or the electronic papers-list via the at least one electronic paper 200. This is described with reference to FIGS. 15 and 16.

FIG. 15 illustrates the display unit 141 of the electronic paper controlling apparatus 100, according to an exemplary embodiment.

As illustrated in FIG. 15, the electronic paper controlling apparatus 100 may include the display unit 141. Thus, the electronic paper controlling apparatus 100 may display a contents-list or an electronic papers-list on the display unit 141.

The electronic paper controlling apparatus 100 may display the contents-list on a first region of the display unit 141 and may display the electronic papers-list on a second region of the display unit 141. For example, FIG. 15 illustrates a content-list of content of the electronic papers on the left side of the display 141 and illustrates an electronic papers-list of the electronic papers on the right side of the display 141.

FIG. 16 is a flowchart of a method of controlling an output from electronic paper 200, according to an exemplary embodiment.

As illustrated in FIG. 16, the electronic paper controlling apparatus 100 may control the output from the electronic paper 200. In particular, according to the present exemplary embodiment, the electronic paper controlling apparatus 100 may determine an electronic paper as a master electronic paper and may control an output from the master electronic paper. The electronic paper controlling apparatus 100 may determine an electronic paper as the master electronic paper, where the electronic paper is positioned at a top of a stack of electronic paper. For example, the electronic paper controlling apparatus 100 may determine a first electronic paper 200-1, which is at the top of the stack, as the master electronic paper.

According to another exemplary embodiment, the electronic paper controlling apparatus 100 may determine an electronic paper, which includes a user input function, as the master electronic paper. For example, when the first electronic paper 200-1 includes the user input function and a second electronic paper 200-2, a third electronic paper 200-3, and a fourth electronic paper 200-4 do not include the user input function, the electronic paper controlling apparatus 100 may determine the first electronic paper 200-1, which includes the user input function, as the master electronic paper.

The electronic paper controlling apparatus 100 may control the output from the master electronic paper so that the master electronic paper may display a contents-list, an electronic papers-list, and a functions-list of functions supported by the electronic paper controlling apparatus 100.

For example, as illustrated in FIG. 16, the electronic paper controlling apparatus 100 may display the contents-list on a first left region of the first electronic paper 200-1 and may display the electronic papers-list on a second right region of the first electronic paper 200-1.

Referring back to FIG. 14, the electronic paper controlling apparatus 100 may receive a selection with respect to content or an electronic paper (operation S1440). According to the present exemplary embodiment, a user may select the content or the electronic paper via at least one of a touch input, a voice input, a motion input, and a bending input. For example, the user may select the content by touching, tapping, or bending a predetermined region of the display unit 141. Also, the user may select the electronic paper to receive content, by inputting a pre-set voice or a pre-set motion.

The electronic paper controlling apparatus 100 may transmit the content to the at least one electronic paper 200 (operation S1450). That is, the electronic paper controlling apparatus 100 may transmit the content that is selected by the user to an electronic paper connected with the connection unit 110. Also, the electronic paper controlling apparatus 100 may transmit content that is stored in the storage unit 160 to the electronic paper selected by the user.

For example, as illustrated in FIG. 15, when the display unit 141 is a touch screen panel, the user may touch and drag 'content 1' to 'PAGE 1' and may then drop 'content 1' over 'PAGE 1'. In this case, the electronic paper controlling apparatus 100 may transmit 'content 1' to the first electronic paper 200-1 and may control an output from the first electronic paper 200-1 so that the first electronic paper 200-1 may display 'content 1'.

When the user taps 'content 3' on the display unit 141 and then bends predetermined regions of the first electronic paper 200-1, the second electronic paper 200-2, and the third electronic paper 200-3 of the at least one electronic paper 200, the electronic paper controlling apparatus 100 may transmit 'content 3' to the first electronic paper 200-1, the second electronic paper 200-2, and the third electronic paper 200-3.

As illustrated in FIG. 16, the electronic paper controlling apparatus 100 may control an output from the first electronic paper 200-1 so that the contents-list may be displayed on the first region of the first electronic paper 200-1 and the electronic papers-list may be displayed on the second region of the first electronic paper 200-1.

Here, the user may select at least one piece of content in the contents-list of the first region and may select at least one electronic paper in the electronic papers-list of the second region. According to the present exemplary embodiment, the user may select the content or the electronic paper via at least one of the touch input and the bending input.

For example, in a case where the user attempts to select 'content 3' and to output 'content 3' to the third electronic paper 200-3, the user may touch and drag 'content 3' and then may drop 'content 3' over 'PAGE 3'. Also, the user may bend a position at which 'content 3' is displayed and a position at which 'PAGE 3' is displayed. The user may tap the position of 'content 3' and may bend the position of 'PAGE 3'. In the present exemplary embodiment, the user may tap the position of 'content 3' and may bend an electronic paper that corresponds to 'PAGE 3'. According to the present exemplary embodiment, the communication unit 120 of the electronic paper controlling apparatus 100 may transmit the content in the contents-list of the first region of the electronic paper controlling apparatus 100 to the electronic paper in the electronic papers-list of the second region.

According to another exemplary embodiment, the communication unit 120 of the electronic paper controlling apparatus 100 may receive information about a bending motion of the master electronic paper from the master electronic paper and may transmit content to an electronic paper, based on the information about the bending motion, where the content corresponds to a bent position of the first region and the electronic paper corresponds to a bent position of the second region.

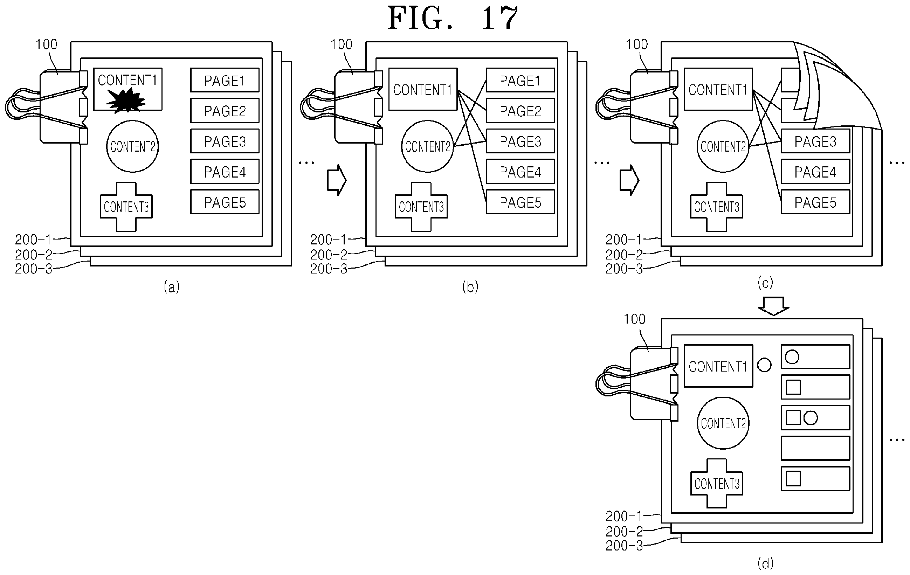

FIGS. 17(a), 17(b), 17(c), and 17(d) illustrate screens on which content is selected by a user, according to an exemplary embodiment.

As illustrated in FIG. 17(a), the user may linearly connect content to be shared and an electronic paper to receive the content, via a touch-and-drag gesture. In this case, as illustrated in FIG. 17(b), the electronic paper controlling apparatus 100 may display connection lines between a plurality of pieces of content and electronic papers to a master electronic paper via a GUI.

Here, as illustrated in FIG. 17(c), when the user bends the electronic papers connected to the connection unit 110, according to a pre-set bending motion, the electronic paper controlling apparatus 100 transmits the plurality of pieces of content to the electronic papers, according to the connection lines.

For example, as illustrated in FIG. 17(d), the electronic paper controlling apparatus 100 may transmit 'content 1' to a second electronic paper 200-2, a third electronic paper 200-3, and a fifth electronic paper 200-5, and may transmit 'content 2' to a first electronic paper 200-1 and the third electronic paper 200-3.

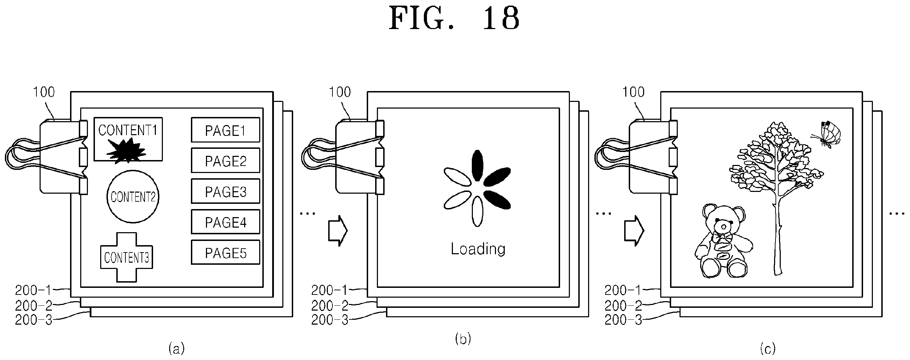

FIGS. 18(a), 18(b), and 18(c), and illustrate screens of a case in which content that is displayed on a slave electronic paper is displayed on a master electronic paper, according to an exemplary embodiment. Here, it is assumed that a first electronic paper 200-1 at a top of a stack of electronic paper 200 is the master electronic paper.

As illustrated in FIG. 18(a), the electronic paper controlling apparatus 100 may control an output from the master electronic paper, which is the first electronic paper 200-1, so that the first electronic paper 200-1 may display an electronic papers-list of electronic papers connected to the connection unit 110. For example, when the first electronic paper 200-1, a second electronic paper 200-2, a third electronic paper 200-3, a fourth electronic paper 200-4, and a fifth-electronic paper 200-5 are connected to the connection unit 110, ID values (e.g., PAGE 1 through PAGE 5) of the first through fifth-electronic papers 200-1 through 200-5 may be displayed on the first electronic paper 200-1, the master electronic paper.

When a user taps 'PAGE 5' for a time period greater than a predetermined time period, the electronic paper controlling apparatus 100 may output content that is displayed on the fifth electronic paper 200-5 to the first electronic paper 200-1. That is, the user may easily view an obstructed screen of a slave electronic paper via the master electronic paper.

The user may edit the content displayed on the fifth electronic paper 200-5. For example, the user may replace, delete, or amend the content displayed on the fifth electronic paper 200-5.

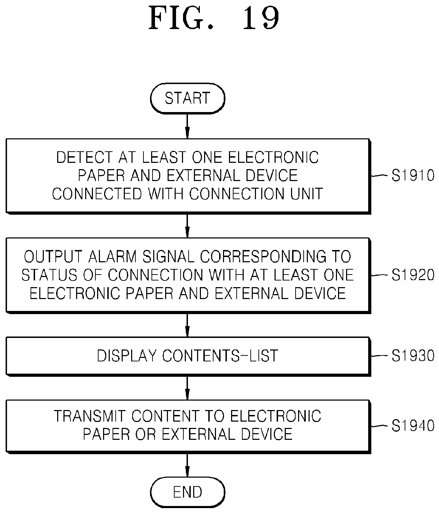

FIG. 19 is a flowchart of a method of performing, by the electronic paper controlling apparatus 100, data communication with the external device 300, according to an exemplary embodiment.

As illustrated in FIG. 19, the electronic paper controlling apparatus 100 may detect connection between the connection unit 110 and the electronic paper 200 or connection between the connection unit 110 and the external device 300 (operation S1910). Here, the electronic paper controlling apparatus 100 may detect the quantity of electronic papers and connection positions of the electronic papers that are connected to the connection unit 110. The method of determining a connection order of one or more electronic papers is described above, thus, detailed descriptions thereof are omitted here.

The electronic paper controlling apparatus 100 may output an alarm signal corresponding to a connection status with the electronic paper 200 or the external device 300 (operation S1920).

For example, the display unit 141 may provide a GUI that indicates a successful connection with or ongoing communication with the electronic paper 200 or the external device 300. The display unit 141 may display an icon that represents the electronic paper 200 or the external device 300, or an icon that represents a position at which the electronic paper 200 or the external device 300 is connected, or the like.

Also, the electronic paper controlling apparatus 100 may output the alarm signal corresponding to the connection status with the electronic paper 200 or the external device 300, via the electronic paper 200.

The electronic paper controlling apparatus 100 may display a contents-list (operation S1930). The contents-list may include at least one of content stored in the storage unit 160 of the electronic paper controlling apparatus 100, content received from the electronic paper 200, and content obtained from the external device 300.

The electronic paper controlling apparatus 100 may display at least one of an electronic papers-list and an external devices-list via the display unit 141 or a master electronic paper. The electronic papers-list indicates a list of the electronic papers connected to the connection unit 110, and the external devices-list indicates a list of a plurality of external devices 300 connected to the connection unit 110. The external device 300 may further include another electronic paper controlling apparatus, an external memory, a server, mobile terminals (e.g., a smart phone, a tablet, a notebook, and the like), a PC, a printer, CE devices (e.g., a smart TV, a camera, a refrigerator, an air conditioner, etc.), or the like.

The electronic paper controlling apparatus 100 may display the electronic papers-list or the external devices-list via the output unit 140 of the electronic paper controlling apparatus 100 or may display the electronic papers-list or the external devices-list via the at least one electronic paper 200.

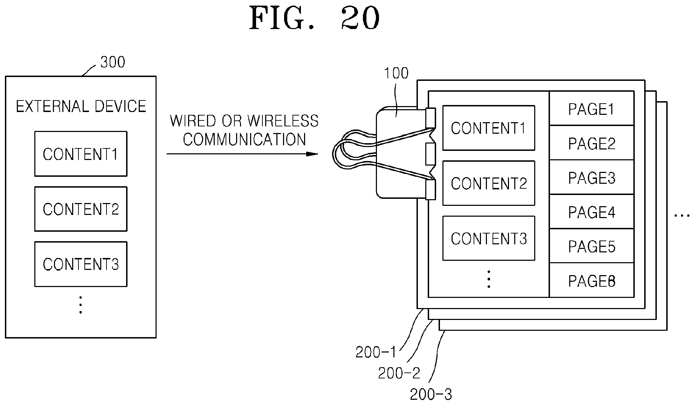

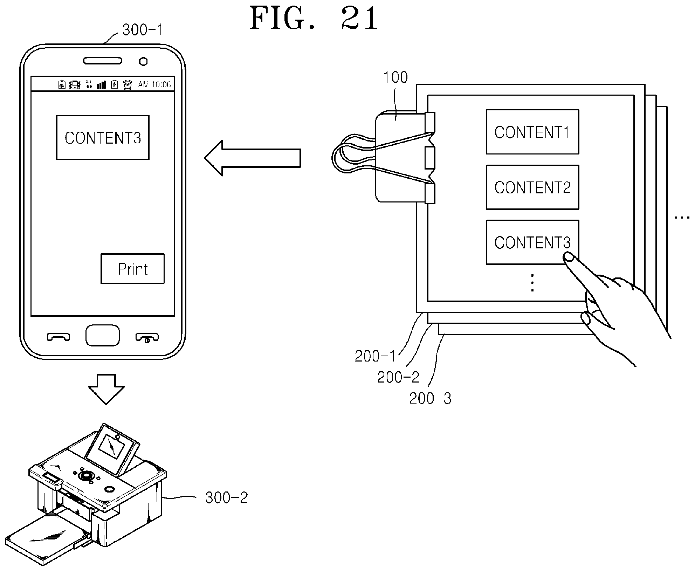

The electronic paper controlling apparatus 100 may transmit content to the at least one electronic paper 200 or the external devices 300 (operation S1940). This is described in detail with reference to FIGS. 20 and 21.

FIG. 20 illustrates transmitting content to the electronic paper 200, according to an exemplary embodiment.

As illustrated in FIG. 20, the electronic paper controlling apparatus 100 may obtain content from the external devices 300. In the present exemplary embodiment, the electronic paper controlling apparatus 100 may perform wired or wireless communication with the external devices 300.

For example, when the electronic paper controlling apparatus 100 receives 'content 1', 'content 2', and 'content 3', the electronic paper controlling apparatus 100 may display a contents-list via the display unit 141 or a first electronic paper 200-1 as the master electronic paper. Also, the electronic paper controlling apparatus 100 may transmit the content obtained from the external devices 300 to the at least one electronic paper 200, in response to a user input.

Thus, according to the present exemplary embodiment, important content such as a letter, a pledge, a contract document, or the like, may be permanently stored by using the at least one electronic paper 200.

FIG. 21 illustrates screens of a case in which a mobile terminal 300-1 outputs content, which is obtained from the electronic paper 200, via a printer, according to an exemplary embodiment.

The electronic paper controlling apparatus 100 may transmit a contents-list, an electronic papers-list (including connection order information with respect to one or more electronic papers), and an external devices-list to the mobile terminal 300-1. In this case, a user may control input/output of the one or more electronic papers via the mobile terminal 300-1. That is, the electronic paper controlling apparatus 100 may function as an interface that connects the mobile terminal 300-1 to the one or more electronic papers.

As illustrated in FIG. 21, the electronic paper controlling apparatus 100 may transmit content, which is selected by the user, to the mobile terminal 300-1. For example, when the user selects 'content 3', the electronic paper controlling apparatus 100 may transmit 'content 3' to the mobile terminal 300-1.

Here, in response to a user input, the mobile terminal 300-1 may transmit 'content 3' to a printer 300-2. In this case, the user may easily print 'content 3' via the printer 300-2.

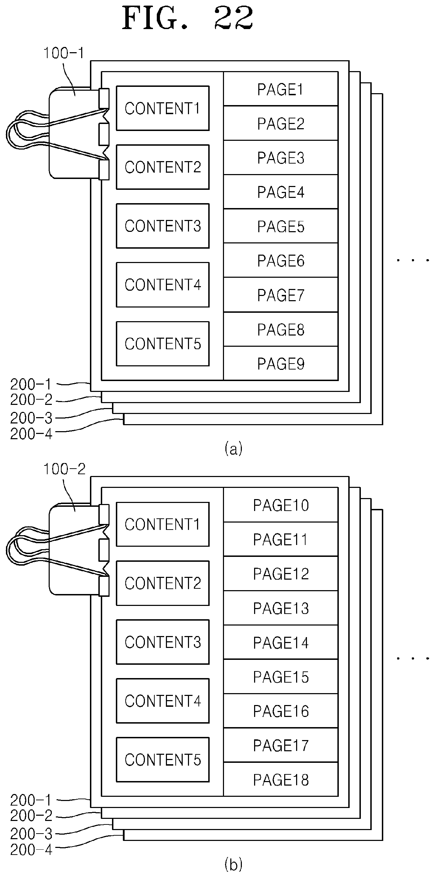

FIGS. 22(a) and 22(b) illustrate a method of performing communication between first and second electronic paper controlling apparatuses 100-1 and 100-2, according to an exemplary embodiment.

As illustrated in FIG. 22, the first electronic paper controlling apparatus 100-1 and the second electronic paper controlling apparatus 100-2 may perform communication with each other. Thus, when the number of electronic papers that are connectable to the first electronic paper controlling apparatus 100-1 is limited, the first electronic paper controlling apparatus 100-1 may control input/output of another electronic paper via communication with the second electronic paper controlling apparatus 100-2.

For example, as illustrated in FIG. 22(a), when only 9 electronic papers can be connected with the first electronic paper controlling apparatus 100-1, other electronic papers are indirectly connected with the first electronic paper controlling apparatus 100-1 via the second electronic paper controlling apparatus 100-2.

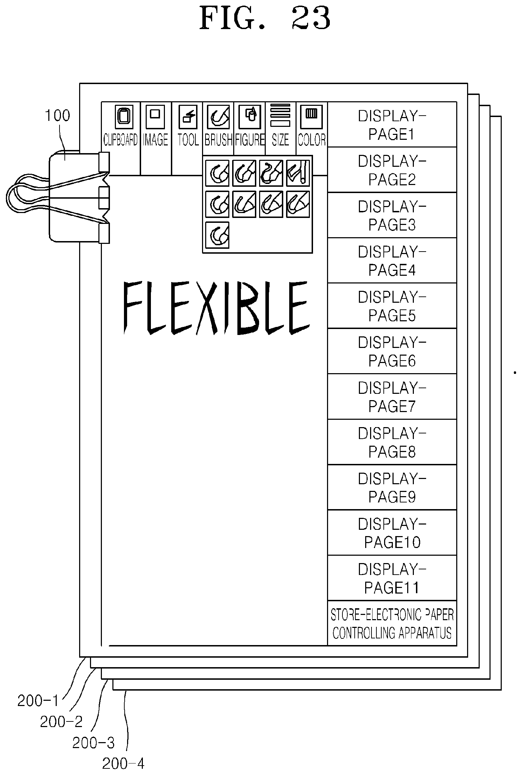

FIG. 23 illustrates a method of controlling an input of electronic paper, according to an exemplary embodiment.

According to the present exemplary embodiment, the electronic paper controlling apparatus 100 may activate a user input function of the at least one electronic paper. For example, the electronic paper controlling apparatus 100 may activate a user input function of an electronic paper that is on the top of a stack of electronic paper or may activate a user input function of an electronic paper 200-1 that is determined to be a master electronic paper. Hereinafter, it is assumed that the user input function of the electronic paper 200-1, as the master electronic paper, is activated.

As illustrated in FIG. 23, the communication unit 120 of the electronic paper controlling apparatus 100 may receive data input by a user from the electronic paper 200-1. Also, the communication unit 120 may transmit data input by the user to the at least one electronic paper 200.

That is, the user may input text or a picture via the electronic paper 200-1, and then may transmit and display the input text or picture to the at least one electronic paper 200. Thus, according to the present exemplary embodiment, the user may use the at least one electronic paper 200 as scratch paper.

The electronic paper controlling apparatus 100 may store the text or picture, which is input via the electronic paper 200-1, in the storage unit 160.

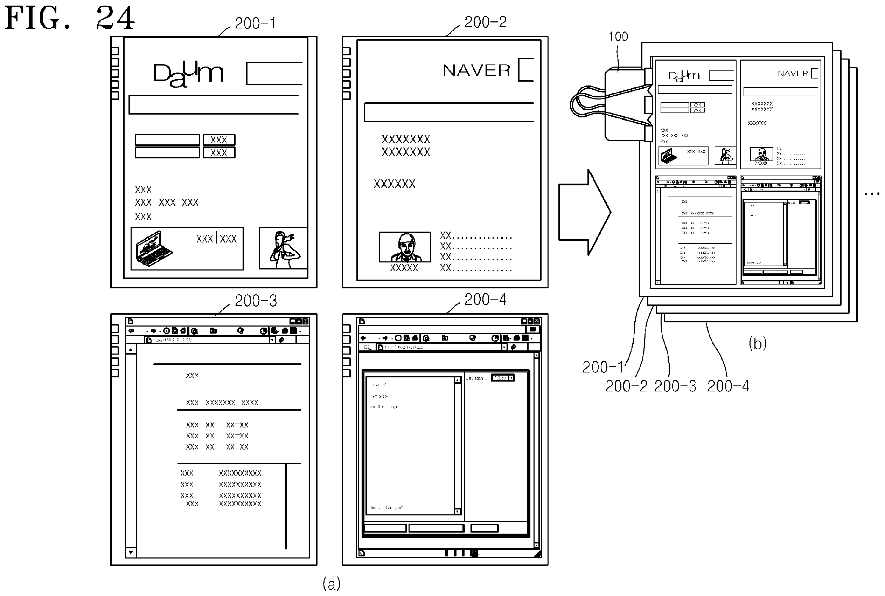

FIG. 24 illustrates a method of obtaining content from the at least one electronic paper 200 and displaying the content, according to an exemplary embodiment.

As illustrated in FIG. 24(a), the electronic paper controlling apparatus 100 may receive information about content displayed on the electronic paper 200. As illustrated in FIG. 24(b), the electronic paper controlling apparatus 100 may display a contents-list, which is about a plurality of pieces of content that are displayed on the electronic paper 200, on a master electronic paper.

For example, in a case where 'X site webpage' is displayed on a first electronic paper 200-1, 'Y site webpage' is displayed on a second electronic paper 200-2, 'A document content' is displayed on a third electronic paper 200-3, and 'B document content' is displayed on a fourth electronic paper 200-4, the electronic paper controlling apparatus 100 may display 'X site webpage', 'Y site webpage', 'A document content', and 'B document content' on a screen of the first electronic paper 200-1 that is the master electronic paper.

When a user desires to select and transmit 'B document content' to a fifth electronic paper, the electronic paper controlling apparatus 100 may control an output to the fifth electronic paper so that 'B document content' may be transmitted to the fifth electronic paper and then may be displayed on the fifth electronic paper. As described above, various methods may be used to select content and an electronic paper.

In order to increase usability of an electronic paper, an electronic paper controlling apparatus decreases functions that are required to be included in the electronic paper and supplements functions of the electronic paper. Thus, according to the exemplary embodiments, it is possible to manufacture an electronic paper that is highly flexible, light in weight, and inexpensive. Also, a user may freely control input and output of the electronic paper by using the electronic paper controlling apparatus.

The functions of the exemplary embodiments can also be embodied as programmed commands to be executed in various computer means, and then can be recorded to a computer-readable recording medium. The computer-readable recording medium may include one or more of the programmed commands, data files, data structures, or the like. The programmed commands recorded to the computer-readable recording medium may be particularly designed or configured or may be well known to one of ordinary skill in the art. Examples of the computer-readable recording medium include magnetic media including hard disks, magnetic tapes, and floppy disks, optical media including CD-ROMs, and DVDs, magneto-optical media including floptical disks, and a hardware apparatus designed to store and execute the programmed commands in read-only memory (ROM), random-access memory (RAM), flash memory, and the like. Examples of the programmed commands include not only machine codes generated by a compiler but also include great codes to be executed in a computer by using an interpreter. The hardware apparatus can be configured to function as one or more software modules so as to perform operations for the invention, or vice versa.

While exemplary embodiments have been particularly shown and described, it will be understood by those of ordinary skill in the art that various changes in form and details may be made therein without departing from the scope of the inventive concept as defined by the following claims.

## Claims

1. An electronic paper controlling apparatus (100) comprising:
an interface (111) configured to connect between the electronic paper controlling apparatus (100) and a plurality of electronic papers (200-N);
a communication unit (110) configured to read or write (S820) identification, ID, information of the plurality of electronic papers (200-N) through the interface (111); and
a controller (170) configured to control the communication unit (110) to communicate (S830) with the plurality of electronic papers (200-N), based on the ID information;
wherein the plurality of electronic papers (200-N) comprises a first electronic paper (200-1) directly coupled to the interface (111), a third electronic paper (200-3) directly coupled to the interface (111), and a second electronic paper (200-2) indirectly coupled to the interface through the first electronic paper (200-1) and the third electronic paper (200-3); and
wherein the controller (170) is further configured to:
determine (S970) a coupling order of coupling the first electronic paper (200-1), the second electronic paper (200-2), and the third electronic paper (200-3) to the interface (111) based on the ID information;
control an electronic paper determined from among the plurality of electronic papers (200-N) to display (S1430) a contents list and an electronic papers list, wherein the electronic papers list indicates the plurality of electronic papers (200-N) according to the determined coupling order;
receive (S1440) a selection of a content included in the contents list and an electronic paper included in the electronic papers list; and
transmit (S1450) the selected content to the selected electronic paper.

2. The electronic paper controlling apparatus (100) of claim 1, wherein the controller (170) is further configured to control the communication unit (110) to communicate (S830) with the plurality of electronic papers (200-N) based on the ID information of the plurality of electronic papers (200-N).

3. The electronic paper controlling apparatus (100) of claim 2, wherein the controller (170) is further configured to control the communication unit (110) to communicate (S820) with the first electronic paper (200-1) among the plurality of electronic papers (200-N) directly through the interface (111) and communicate (S820) with the second electronic paper (200-2) among the plurality of electronic papers (200-N) indirectly through the first electronic paper (200-1) and the interface (111).

4. The electronic paper controlling apparatus (100) of claim 2, wherein the ID information comprises a first ID of the first electronic paper (200-1) among the plurality of electronic papers (200-N) and a second ID of the second electronic paper (200-2) among the plurality of electronic papers (200-N) different from the first ID, and
wherein the controller (170) is further configured to control the communication unit (110) to communicate (S820) with the first electronic paper (200-1) based on the first ID and communicate (S820) with the second electronic paper (200-2) based on the second ID.

5. The electronic paper controlling apparatus of claim 1, wherein the controller (170) is further configured to determine (S970) the first electronic paper (200-1) is directly coupled to the interface (111), the second electronic paper (200-2) is indirectly coupled to the interface (111) through the first electronic paper (200-1) and the third electronic paper (200-3), and the third electronic paper (200-3) is directly coupled to the interface (111), based on the ID information.

6. The electronic paper controlling apparatus (100) of claim 2, further comprising a display (141, 220).

7. The electronic paper controlling apparatus (100) of claim 6, wherein the display (141, 220) comprises a touch screen display (141).

8. The electronic paper controlling apparatus (100) of claim 6, wherein the display (141, 220) comprises the first electronic paper (200-1) among the plurality of electronic papers (200-N).

9. The electronic paper controlling apparatus (100) of claim 6, wherein the controller (170) is further arranged to manipulate the content based on an input of a graphical user interface, GUI, displayed on the electronic paper determined from among the plurality of electronic papers (200-N).

10. A method of controlling an electronic paper controlling apparatus (100), the method comprising:
reading or writing (S820) identification, ID, information of a plurality of electronic papers (200-N) connected to the electronic paper controlling apparatus (100) through an interface (111) of the electronic paper controlling apparatus (100); and
communicating (S830) with the plurality of electronic papers (200-N), based on the ID information;
wherein the plurality of electronic papers (200-N) comprises a first electronic paper (200-1) directly coupled to the interface (111), a third electronic paper (200-3) directly coupled to the interface (111), and a second electronic paper (200-2) indirectly coupled to the interface through the first electronic paper (200-1) and the third electronic paper (200-3); and
wherein the method further comprises:
determining (S970) a coupling order of coupling the first electronic paper (200-1), the second electronic paper (200-2), and the third electronic paper (200-3) to the interface (111) based on the ID information;
controlling an electronic paper determined from among the plurality of electronic papers (200-N) to display (S1430) a contents list and an electronic papers list, wherein the electronic papers list indicates the plurality of electronic papers (200-N) according to the determined coupling order;
receiving (S1440) a selection of a content included in the contents list and an electronic paper included in the electronic papers list; and
transmitting (S1450) the selected content to the selected electronic paper.

11. A non-transitory computer-readable medium having recorded thereon a program that causes an electronic paper controlling apparatus (100) to execute a control method, the method comprising:
reading or writing (S820) identification, ID, information of a plurality of electronic papers (200-N) connected to the electronic paper controlling apparatus (100) through an interface (111) of the electronic paper controlling apparatus (100); and
communicating (S830) with the plurality of electronic papers (200-N), based on the ID information;
wherein the plurality of electronic papers (200-N) comprises a first electronic paper (200-1) directly coupled to the interface (111), a third electronic paper (200-3) directly coupled to the interface (111), and a second electronic paper (200-2) indirectly coupled to the interface through the first electronic paper (200-1) and the third electronic paper (200-3); and
wherein the method further comprises:
determining (S970) a coupling order of coupling the first electronic paper (200-1), the second electronic paper (200-2), and the third electronic paper (200-3) to the interface (111) based on the ID information;
controlling an electronic paper from among the plurality of electronic papers (200-N) to display (S1430) a contents list and an electronic papers list, wherein the electronic papers list indicates the plurality of electronic papers (200-N) according to the determined coupling order;
receiving (S1440) a selection of a content included in the contents list and an electronic paper included in the electronic papers list; and
transmitting (S1450) the selected content to the selected electronic paper.

## Patentansprüche

1. Elektronische Papiersteuervorrichtung (100), umfassend:
eine Schnittstelle (111), die konfiguriert ist, um zwischen der elektronischen Papiersteuervorrichtung (100) und einer Vielzahl elektronischer Papiere (200-N) zu verbinden;
eine Kommunikationseinheit (110), die konfiguriert ist, um Identifikations-(ID)-Informationen der Vielzahl elektronischer Papiere (200-N) durch die Schnittstelle (111) zu lesen oder zu schreiben (S820); und
eine Steuerung (170), die konfiguriert ist, um, basierend auf den ID-Informationen, die Kommunikationseinheit (110) zu steuern, mit der Vielzahl elektronischer Papiere (200-N) zu kommunizieren (S830);
wobei die Vielzahl elektronischer Papiere (200-N) ein erstes elektronisches Papier (200-1), das direkt an die Schnittstelle (111) gekoppelt ist, ein drittes elektronisches Papier (200-3), das direkt an die Schnittstelle (111) gekoppelt ist, und ein zweites elektronisches Papier (200-2), das über das erste elektronische Papier (200-1) und das dritte elektronische Papier (200-3) indirekt an die Schnittstelle gekoppelt ist, umfasst; und
wobei die Steuerung (170) ferner konfiguriert ist, um:
eine Kopplungsreihenfolge des Koppelns des ersten elektronischen Papiers (200-1), des zweiten elektronischen Papiers (200-2) und des dritten elektronischen Papiers (200-3) an die Schnittstelle (111) auf der Grundlage der ID-Informationen zu bestimmen (S970);
ein aus der Vielzahl elektronischer Papiere (200-N) bestimmtes elektronisches Papier zu steuern, um eine Inhaltsliste und eine Liste elektronischer Papiere anzuzeigen (S1430), wobei die Liste elektronischer Papiere die Vielzahl elektronischer Papiere (200-N) entsprechend der bestimmten Kopplungsreihenfolge anzeigt;
eine Auswahl eines in der Inhaltsliste enthaltenen Inhalts und eines in der Liste elektronischer Papiere enthaltenen elektronischen Papiers zu empfangen (S1440); und
den ausgewählten Inhalt an das ausgewählte elektronische Papier zu übermitteln (S1450).

2. Elektronische Papiersteuervorrichtung (100) nach Anspruch 1, wobei die Steuerung (170) ferner konfiguriert ist, um die Kommunikationseinheit (110) zu steuern, um auf der Grundlage der ID-Informationen der Vielzahl elektronischer Papiere (200-N) mit der Vielzahl elektronischer Papiere (200-N) zu kommunizieren (S830).

3. Elektronische Papiersteuervorrichtung (100) nach Anspruch 2, wobei die Steuerung (170) ferner konfiguriert ist, um die Kommunikationseinheit (110) zu steuern, um mit dem ersten elektronischen Papier (200-1) aus der Vielzahl elektronischer Papiere (200-N) direkt über die Schnittstelle (111) zu kommunizieren (S820) und mit dem zweiten elektronischen Papier (200-2) aus der Vielzahl elektronischer Papiere (200-N) indirekt über das erste elektronische Papier (200-1) und die Schnittstelle (111) zu kommunizieren (S820).

4. Elektronische Papiersteuervorrichtung (100) nach Anspruch 2, wobei die ID-Informationen eine erste ID des ersten elektronischen Papiers (200-1) aus der Vielzahl elektronischer Papiere (200-N) und eine zweite ID des zweiten elektronischen Papiers (200-2) aus der Vielzahl elektronischer Papiere (200-N), die sich von der ersten ID unterscheidet, umfassen, und wobei die Steuerung (170) ferner konfiguriert ist, um die Kommunikationseinheit (110) zu steuern, um auf der Grundlage der ersten ID mit dem ersten elektronischen Papier (200-1) zu kommunizieren (S820) und auf der Grundlage der zweiten ID mit dem zweiten elektronischen Papier (200-2) zu kommunizieren (S820).

5. Elektronische Papiersteuervorrichtung nach Anspruch 1, wobei die Steuerung (170) ferner konfiguriert ist, um auf der Grundlage der ID-Informationen zu bestimmen (S970), dass das erste elektronische Papier (200-1) direkt an die Schnittstelle (111) gekoppelt ist, das zweite elektronische Papier (200-2) über das erste elektronische Papier (200-1) und das dritte elektronische Papier (200-3) indirekt an die Schnittstelle (111) gekoppelt ist und das dritte elektronische Papier (200-3) direkt an die Schnittstelle (111) gekoppelt ist.

6. Elektronische Papiersteuervorrichtung (100) nach Anspruch 2, ferner umfassend eine Anzeige (141, 220).

7. Elektronische Papiersteuervorrichtung (100) nach Anspruch 6, wobei die Anzeige (141, 220) eine Berührungsbildschirmanzeige (141) umfasst.

8. Elektronische Papiersteuervorrichtung (100) nach Anspruch 6, wobei die Anzeige (141, 220) das erste elektronische Papier (200-1) aus der Vielzahl elektronischer Papiere (200-N) umfasst.

9. Elektronische Papiersteuervorrichtung (100) nach Anspruch 6, wobei die Steuerung (170) ferner angeordnet ist, um den Inhalt auf der Grundlage einer Eingabe einer auf dem unter der Vielzahl elektronischer Papiere (200-N) bestimmten elektronischen Papier angezeigten graphischen Nutzerschnittstelle (GUI) zu manipulieren.

10. Verfahren zum Steuern einer elektronischen Papiersteuervorrichtung (100), wobei das Verfahren umfasst:
Lesen oder Schreiben (S820) von Identifikations-(ID)-Informationen einer Vielzahl von mit der elektronischen Papiersteuervorrichtung (100) über eine Schnittstelle (111) der elektronischen Papiersteuervorrichtung (100) verbundenen elektronischen Papiere (200-N); und
Kommunizieren (S830) auf der Grundlage der ID-Informationen mit der Vielzahl elektronischer Papiere (200-N);
wobei die Vielzahl elektronischer Papiere (200-N) ein erstes elektronisches Papier (200-1), das direkt an die Schnittstelle (111) gekoppelt ist, ein drittes elektronisches Papier (200-3), das direkt an die Schnittstelle (111) gekoppelt ist, und ein zweites elektronisches Papier (200-2), das über das erste elektronische Papier (200-1) und das dritte elektronische Papier (200-3) indirekt an die Schnittstelle gekoppelt ist, umfasst; und
wobei das Verfahren ferner umfasst:
Bestimmen (S970) einer Kopplungsreihenfolge des Koppelns des ersten elektronischen Papiers (200-1), des zweiten elektronischen Papiers (200-2) und des dritten elektronischen Papiers (200-3) an die Schnittstelle (111) auf der Grundlage der ID-Informationen;
Steuern eines aus der Vielzahl elektronischer Papiere (200-N) bestimmten elektronischen Papiers, um eine Inhaltsliste und eine Liste elektronischer Papiere anzuzeigen (S1430), wobei die Liste elektronischer Papiere die Vielzahl elektronischer Papiere (200-N) entsprechend der bestimmten Kopplungsreihenfolge anzeigt;
Empfangen (S1440) einer Auswahl eines in der Inhaltsliste enthaltenen Inhalts und eines in der Liste elektronischer Papiere enthaltenen elektronischen Papiers;
und Übermitteln (S1450) des ausgewählten Inhalts an das ausgewählte elektronische Papier.

11. Nicht-transitorisches computerlesbares Medium, das ein darauf aufgezeichnetes Programm aufweist, das eine elektronische Papiersteuervorrichtung (100) veranlasst, ein Steuerverfahren auszuführen, wobei das Verfahren umfasst:
Lesen oder Schreiben (S820) von Identifikations-(ID)-Informationen einer Vielzahl von mit der elektronischen Papiersteuervorrichtung (100) über eine Schnittstelle (111) der elektronischen Papiersteuervorrichtung (100) verbundenen elektronischen Papiere (200-N); und
Kommunizieren (S830) auf der Grundlage der ID-Informationen mit der Vielzahl elektronischer Papiere (200-N);
wobei die Vielzahl elektronischer Papiere (200-N) ein erstes elektronisches Papier (200-1), das direkt an die Schnittstelle (111) gekoppelt ist, ein drittes elektronisches Papier (200-3), das direkt an die Schnittstelle (111) gekoppelt ist, und ein zweites elektronisches Papier (200-2), das über das erste elektronische Papier (200-1) und das dritte elektronische Papier (200-3) indirekt an die Schnittstelle gekoppelt ist, umfasst; und wobei das Verfahren ferner umfasst:
Bestimmen (S970) einer Kopplungsreihenfolge des Koppelns des ersten elektronischen Papiers (200-1), des zweiten elektronischen Papiers (200-2) und des dritten elektronischen Papiers (200-3) an die Schnittstelle (111) auf der Grundlage der ID-Informationen;
Steuern eines elektronischen Papiers aus der Vielzahl elektronischer Papiere (200-N), um eine Inhaltsliste und eine Liste elektronischer Papiere anzuzeigen (S1430), wobei die Liste elektronischer Papiere die Vielzahl elektronischer Papiere (200-N) entsprechend der bestimmten Kopplungsreihenfolge anzeigt;
Empfangen (S1440) einer Auswahl eines in der Inhaltsliste enthaltenen Inhalts und eines in der Liste elektronischer Papiere enthaltenen elektronischen Papiers;
und Übermitteln (S1450) des ausgewählten Inhalts an das ausgewählte elektronische Papier.

## Revendications

1. Appareil de commande de papier électronique (100) comprenant :
une interface (111) conçue pour se connecter entre l'appareil de commande de papier électronique (100) et une pluralité de papiers électroniques (200-N) ;
une unité de communication (110) conçue pour lire ou écrire (S820) des informations d'identification (ID) de la pluralité de papiers électroniques (200-N) par l'intermédiaire de l'interface (111) ; et
un dispositif de commande (170) conçu pour commander l'unité de communication (110) pour communiquer (S830) avec la pluralité de papiers électroniques (200-N) sur la base des informations d'ID ;
ladite pluralité de papiers électroniques (200-N) comprenant un premier papier électronique (200-1) couplé directement à l'interface (111), un troisième papier électronique (200-3) couplé directement à l'interface (111), et un deuxième papier électronique (200-2) couplé indirectement à l'interface par l'intermédiaire du premier papier électronique (200-1) et du troisième papier électronique (200-3) ; et ledit dispositif de commande (170) étant conçu en outre pour :
déterminer (S970) un ordre de couplage du couplage du premier papier électronique (200-1), du deuxième papier électronique (200-2) et du troisième papier électronique (200-3) à l'interface (111) sur la base des informations d'ID ;
commander un papier électronique déterminé parmi la pluralité de papiers électroniques (200-N) pour afficher (S1430) une liste de contenus et une liste de papiers électroniques, ladite liste de papiers électroniques indiquant la pluralité de papiers électroniques (200-N) selon l'ordre de couplage déterminé ;
recevoir (S 1440) un choix d'un contenu compris dans la liste de contenus et un papier électronique compris dans la liste de papiers électroniques ; et
transmettre (S 1450) le contenu choisi du papier électronique choisi.

2. Appareil de commande de papier électronique (100) selon la revendication 1, ledit dispositif de commande (170) étant conçu en outre pour commander l'unité de communication (110) pour communiquer (S830) avec la pluralité de papiers électroniques (200-N) sur la base des informations d'ID de la pluralité de papiers électroniques (200-N).

3. Appareil de commande de papier électronique (100) selon la revendication 2, ledit dispositif de commande (170) étant conçu en outre pour commander l'unité de communication (110) pour communiquer (S820) avec le premier papier électronique (200-1) parmi la pluralité de papiers électroniques (200-N) directement par l'intermédiaire de l'interface (111) et communiquer (S820) avec le deuxième papier électronique (200-2) parmi la pluralité de papiers électroniques (200-N) indirectement par l'intermédiaire du premier papier électronique (200-1) et de l'interface (111).

4. Appareil de commande de papier électronique (100) selon la revendication 2, lesdites informations d'ID comprenant un premier ID du premier papier électronique (200-1) parmi la pluralité de papiers électroniques (200-N) et un second ID du deuxième papier électronique (200-2) parmi la pluralité de papiers électroniques (200-N) différent du premier ID, et ledit dispositif de commande (170) étant conçu en outre pour commander l'unité de communication (110) pour communiquer (S820) avec le premier papier électronique (200-1) sur la base du premier ID et communiquer (S820) avec le deuxième papier électronique (200-2) sur la base du second ID.

5. Appareil de commande de papier électronique selon la revendication 1, ledit dispositif de commande (170) étant conçu en outre pour déterminer (S970) que le premier papier électronique (200-1) est couplé directement à l'interface (111), le deuxième papier électronique (200-2) est couplé indirectement à l'interface (111) par l'intermédiaire du premier papier électronique (200-1) et du troisième papier électronique (200-3) et le troisième papier électronique (200-3) est couplé directement à l'interface (111) sur la base des information d'ID.

6. Appareil de commande de papier électronique (100) selon la revendication 2, comprenant en outre un dispositif d'affichage (141, 220).

7. Appareil de commande de papier électronique (100) selon la revendication 6, ledit dispositif d'affichage (141, 220) comprenant un dispositif d'affichage à écran tactile (141).

8. Appareil de commande de papier électronique (100) selon la revendication 6, ledit dispositif d'affichage (141, 220) comprenant le premier papier électronique (200-1) parmi la pluralité de papiers électroniques (200-N).

9. Appareil de commande de papier électronique (100) selon la revendication 6, ledit dispositif de commande (170) étant agencé en outre pour manipuler le contenu sur la base d'une entrée sur une interface utilisateur graphique (GUI) affichée sur le papier électronique déterminé parmi la pluralité de papiers électroniques (200-N).

10. Procédé de commande d'un appareil de commande de papier électronique (100), ledit procédé comprenant :
la lecture ou l'écriture (S820) d'informations d'identification (ID) d'une pluralité de papiers électroniques (200-N) connectés à l'appareil de commande de papier électronique (100) par une interface (111) de l'appareil de commande de papier électronique (100) ; et
la communication (S830) avec la pluralité de papiers électroniques (200-N) sur la base des informations d'ID ;
ladite pluralité de papiers électroniques (200-N) comprenant un premier papier électronique (200-1) couplé directement à l'interface (111), un troisième papier électronique (200-3) couplé directement à l'interface (111) et un deuxième papier électronique (200-2) couplé indirectement à l'interface par l'intermédiaire du premier papier électronique (200-1) et du troisième papier électronique (200-3) ; et ledit procédé comprenant en outre :
la détermination (S970) d'un ordre de couplage du couplage du premier papier électronique (200-1), du deuxième papier électronique (200-2), et du troisième papier électronique (200-3) à l'interface (111) sur la base des informations d'ID ;
la commande d'un papier électronique déterminé parmi la pluralité de papiers électroniques (200-N) pour afficher (S1430) une liste de contenus et une liste de papiers électroniques, ladite liste de papiers électroniques indiquant la pluralité de papiers électroniques (200-N) selon l'ordre de couplage déterminé ;
la réception (S1440) d'un choix d'un contenu compris dans la liste de contenus et d'un papier électronique compris dans la liste de papiers électroniques ; et
la transmission (S1450) du contenu choisi au papier électronique choisi.

11. Support lisible par ordinateur non transitoire comportant un programme enregistré sur celui-ci qui amène un appareil de commande de papier électronique (100) à exécuter un procédé de commande, ledit procédé comprenant :
la lecture ou l'écriture (S820) d'informations d'identification (ID) d'une pluralité de papiers électroniques (200-N) connectés à l'appareil de commande de papier électronique (100) par une interface (111) de l'appareil de commande de papier électronique (100) ; et
la communication (S830) avec la pluralité de papiers électroniques (200-N) sur la base des informations d'ID ;
ladite pluralité de papiers électroniques (200-N) comprenant un premier papier électronique (200-1) couplé directement à l'interface (111), un troisième papier électronique (200-3) couplé directement à l'interface (111) et un deuxième papier électronique (200-2) couplé indirectement à l'interface par l'intermédiaire du premier papier électronique (200-1) et du troisième papier électronique (200-3) ; et ledit procédé comprenant en outre :
la détermination (S970) d'un ordre de couplage du couplage du premier papier électronique (200-1), du deuxième papier électronique (200-2) et du troisième papier électronique (200-3) à l'interface (111) sur la base des informations d'ID ;
la commande d'un papier électronique parmi la pluralité de papiers électroniques (200-N) pour afficher (S1430) une liste de contenus et une liste de papiers électroniques, ladite liste de papiers électroniques indiquant la pluralité de papiers électroniques (200-N) selon l'ordre de couplage déterminé ;
la réception (S1440) d'un choix d'un contenu compris dans la liste de contenus et d'un papier électronique compris dans la liste de papiers électroniques ; et
la transmission (S 1450) du contenu choisi au papier électronique choisi.
